# EUROPÄISCHE PATENTSCHRIFT

(11) **EP 2 640 604 B1**
(45) Veröffentlichungstag und Bekanntmachung des Hinweises auf die Patenterteilung: **25.03.2015**
(21) Anmeldenummer: 11799078.8
(22) Anmeldetag: 21.11.2011
(51) Int. Cl.: B60R 11/02, H01F 38/14, H02J 7/02

(54) **VERSCHLUSSVORRICHTUNG MIT ELEKTROMAGNETISCHER KOPPLUNG**
CLOSURE DEVICE WITH ELECTROMAGNETIC COUPLING
DISPOSITIF DE FERMETURE DOTÉ D'UN ACCOUPLEMENT ÉLECTROMAGNÉTIQUE

(30) Priorität: 19.11.2010 DE 102010044194; 19.11.2010 DE 102010044198
(43) Veröffentlichungstag der Anmeldung: 25.09.2013
(73) Patentinhaber: Fidlock GmbH, 30163 Hannover (DE)
(72) Erfinder: FIEDLER, Joachim, 30175 Hannover (DE)
(74) Vertreter: Schröder, Christoph
(86) Internationale Anmeldenummer: PCT/EP2011/070601
(87) Internationale Veröffentlichungsnummer: WO 2012/066146

(56) Entgegenhaltungen:
- EP-A2- 0 823 717
- WO-A1-2010/084191
- WO-A2-2010/080739

## Beschreibung

### Beschreibung

Die Erfindung betriff eine Verschlussvorrichtung nach dem Oberbegriff des Anspruchs 1.

Eine derartige Verschlussvorrichtung ist aus der WO 2010/080739 A2 bekannt.

Verschlussvorrichtungen, bei denen das Überführen der Verschlussteile in eine Schließstellung in magnetisch unterstützter Weise erfolgt und die in einer Schließstellung mechanisch miteinander verrastet sind, sind beispielsweise aus der WO 2008/006357 A2, der WO 2009/092368 A2, der WO 2010/006594 A2, der WO 2008/006354 A2, der WO 2008/006356 A2, der WO 2009/010049 A2 und der WO 2009/12796 A2 bekannt, deren Inhalt in die vorliegende Anmeldung mit einbezogen werden soll.

Bei einer aus der WO 2008/006357A2 bekannten Verschlussvorrichtung beispielsweise werden zwei Verschlussteile in eine Schließrichtung aneinander angesetzt und verrasten dabei mechanisch miteinander. Dadurch, dass sowohl an dem ersten Verschlussteil als auch an dem zweiten Verschlussteil jeweils ein Magnet oder einerseits ein Magnet und andererseits ein magnetischer Anker angeordnet sind, wird die Überführung der Verschlussteile in die Schließstellung der Verschlussvorrichtung und die Herstellung der mechanischen Verrastung zwischen den Verschlussteilen magnetisch unterstützt. Bei geeigneter Dimensionierung der Magnete erfolgt das Schließen der Verschlussvorrichtung weitestgehend selbsttätig, wenn die Verschlussteile aneinander angenähert werden. Durch Verschieben oder Verdrehen der Verschlussteile relativ zueinander kann die mechanische Verrastung wieder gelöst werden, wobei gleichzeitig die magnetischen Mittel durch eine Relativbewegung voneinander abgeschert und damit voneinander entfernt werden, so dass sich die magnetische Anziehungskraft zwischen den Magneten verringert und die Verschlussteile nach Aufheben der mechanischen Verrastung in leichter, haptisch angenehmer Weise voneinander getrennt werden können.

Verschlussvorrichtungen dieser Art stellen in ihrer Schließstellung eine sichere, belastbare Verbindung zweier Teile miteinander zur Verfügung und können auf einfache Weise geschlossen und auf haptisch angenehme Weise wieder geöffnet werden.

Es ist bekannt, beispielsweise in einem Fahrzeug an einem Armaturenbrett ein Mobiltelefon oder ein Navigationsgerät anzuordnen und mechanisch durch eine geeignete Haltevorrichtung an dem Armaturenbrett zu halten. Für die Stromversorgung eines solchen elektrischen Endgeräts wird hierbei in der Regel ein elektrisches Verbindungskabel verwendet, das beispielsweise in einen Zigarettenanzünder des Fahrzeugs eingesteckt wird, über den eine Gleichspannung abgegriffen und zur elektrischen Versorgung des am Armaturenbrett angeordneten Gerätes verwendet werden kann. Zudem ist eine Datenverbindung drahtlos über Schnittstellen wie Bluetooth oder drahtgebunden über ein Verbindungskabel bekannt.

Aufgabe der vorliegenden Erfindung ist es, die Verriegelung der Verschlussvorrichtung gemäß dem Oberbegriff des Anspruchs 1 zu verbessern. Diese Aufgabe wird durch einen Gegenstand mit den Merkmalen des Anspruchs 1 gelöst.

Die vorliegende Erfindung geht von dem Gedanken aus, in die Verschlussteile der Verschlussvorrichtung jeweils eine elektrische Spule zu integrieren, die in der Schließstellung der Verschlussvorrichtung so zueinander angeordnet sind, dass sie für eine Energieübertragung oder eine Datensignalübertragung in elektromagnetischer Weise miteinander gekoppelt sind. Eine erste Spule ist hierbei an dem ersten Verschlussteil und eine zweite Spule an dem zweiten Verschlussteil angeordnet, wobei sich diese Spulen in der Schließstellung der Verschlussvorrichtung so gegenüberstehen, dass ein in einer der Spulen erzeugter magnetischer Fluss durch die andere der Spulen hindurch tritt und eine Spannung an dieser Spule induziert, so dass die Spulen induktiv miteinander gekoppelt sind.

Das erste Verschlussteil und das zweite Verschlussteil können jeweils einen Gehäuseabschnitt aufweisen, die sich in der Schließstellung vorzugsweise parallel zueinander erstrecken und flächig aneinander anliegen, wobei sich die Spulen vorzugsweise in der Schließstellung in parallelen, quer zur Schließrichtung verlaufenden Ebenen an den Gehäuseabschnitten erstrecken.

Die Gehäuseabschnitte des ersten Verschlussteils und des zweiten Verschlussteils liegen hierbei flächig aneinander an. An den Gehäuseabschnitten sind, in parallelen Ebenen, die Spulen in planarer Weise angeordnet und stehen sich in der Schließstellung für eine vorteilhafte induktive Kopplung gegenüber, wobei durch die planare Anordnung in parallelen Ebenen der Abstand der Spulen in die Schließrichtung nach Möglichkeit minimiert werden kann.

Die Spulen können für eine Energieübertragung ausgelegt sein, wobei beispielsweise eine der Spulen mit einem elektrischen Versorgungssystem verbunden ist und - beispielsweise in niedrigfrequenter Weise (z.B. im Hz- oder kHz-Bereich) - aufgrund der induktiven Kopplung in der Schließstellung Energie hin zu der anderen der Spulen und einem mit dieser Spule verbundenen elektrischen Verbraucher - beispielsweise einem Mobiltelefon oder einem Navigationsgerät - überträgt.

Solch eine Verschlussvorrichtung, in die elektrische Spulen für eine elektromagnetische Kopplung integriert sind, kann beispielsweise in einem Fahrzeug zur elektrischen Versorgung von an einem Armaturenbrett angeordneten, über die Verschlussvorrichtung gehalterten elektrischen Geräten ausgelegt sein.

Die Spulen können zusätzlich oder alternativ auch für eine elektronische Datensignalübertragung ausgelegt sein und dazu elektromagnetische Signale im Hochfrequenzbereich (z.B. im kHz-, MHz- oder GHz-Bereich) übertragen.

Die Spulen können beispielsweise in die Verschlussteile, beispielsweise in aus Kunststoff gefertigte Gehäuseteile der Verschlussteile, eingespritzt oder auf sonstige Weise an den Verschlussteilen befestigt sein.

Die Spulen können grundlegend eine beliebige Form aufweisen und aus einer oder mehreren Windungen gebildet sein.

Die magnetischen Mittel wirken vorzugsweise zwischen dem Sperrstück des ersten Verschlussteils und dem zweiten Verschlussteil und bewirken eine magnetische Anziehungskraft zwischen dem Sperrstück des ersten Verschlussteils und dem zweiten Verschlussteil bewirken. Die magnetischen Mittel können dabei so dimensioniert sein, dass sie einen Schließvorgang, bei dem das Sperrstück des ersten Verschlussteils an das Federverriegelungselement des zweiten Verschlussteils angesetzt wird, derart unterstützen, dass das Sperrstück in leichtgängiger, haptisch angenehmer Weise mit dem Federverriegelungselement rastend in Eingriff schnappt. Das Sperrstück wird dazu in die Schließrichtung an das Federverriegelungselement angesetzt und läuft derart auf einen Rastabschnitt an dem Federverriegelungselement auf, dass das Federverriegelungselement abschnittsweise beiseite gedrängt wird, bis das Sperrstück mit dem Federverriegelungselement in Eingriff schnappt.

Vorteilhafterweise sind die magnetischen Mittel so dimensioniert, dass das Sperrstück und das Federverriegelungselement bei einem Schließvorgang unter Wirkung der magnetischen Anziehungskraft weitestgehend selbsttätig rastend miteinander in Eingriff gelangen. Das rastende Ineingriffbringen wird somit nicht nur unterstützt, sondern läuft selbsttätig ab, wenn das Sperrstück an das Federverriegelungselement angesetzt wird.

Das Sperrstück ist in einer vorteilhaften Ausgestaltung beweglich an dem Gehäuse des ersten Verschlussteils angeordnet derart, dass es in einer eingefahrenen Position zumindest teilweise in einer Aufnahmekammer des Gehäuses eingefasst ist und in einer ausgefahrenen Position derart von dem Gehäuse vorsteht, dass es in Eingriff mit dem Federverriegelungselement bringbar ist. In einer eingefahrenen Position steht das Sperrstück somit nicht oder zumindest nicht vollständig von dem Gehäuse vor. In einer geöffneten Stellung der Verschlussvorrichtung befindet sich das Sperrstück in der eingefahrenen Position und ist somit nicht hinderlich oder störend bei einem Gebrauch eines mit dem ersten Verschlussteil verbundenen Bauteils. Beim Schließen der Verschlussvorrichtung wird das Sperrstück von seiner eingefahrenen Position in die ausgefahrene Position überführt und steht in dieser ausgefahrenen Position derart von dem Gehäuse vor, dass es in Eingriff mit dem Federverriegelungselement gebracht und somit zum Verriegeln des ersten Verschlussteils mit dem zweiten Verschlussteil rastend an das Federverriegelungselement angesetzt werden kann.

Eine Vorrichtung mit einem bewegbaren Sperrstück kann grundsätzlich, als Vorrichtung zur induktiven Kopplung, auch ohne eine mechanische Verrastung zum Einsatz kommen. Allgemein umfasst in diesem Fall eine Vorrichtung zur induktiven Kopplung zweier Bauteile ein erstes Verschlussteil, das ein Gehäuse und eine erste elektrische Spule aufweist, und ein zweites Verschlussteil, das eine zweite elektrische Spule aufweist, wobei das erste Verschlussteil zur induktiven Kopplung der ersten Spule und der zweiten Spule in eine Schließrichtung an das zweite Verschlussteil ansetzbar ist und in einer Schließstellung der Vorrichtung das erste Verschlussteil und das zweite Verschlussteil zur induktiven Kopplung der ersten Spule und der zweiten Spule in Wirkverbindung stehen. Dabei ist vorgesehen, dass das erste Verschlussteil ein verschiebbar an dem Gehäuse des ersten Verschlussteils angeordnetes Sperrstück aufweist, das in einer eingefahrenen Position zumindest teilweise von dem Gehäuse des ersten Verschlussteils eingefasst ist und in einer ausgefahrenen Position zum Eingreifen in eine Aufnahmeöffnung des zweiten Verschlussteils zur induktiven Kopplung der ersten Spule mit der zweiten Spule von dem Gehäuse des ersten Verschlussteils vorsteht.

Um eine wirkungsvolle induktive Kopplung einer ersten Spule des ersten Verschlussteils und einer zweiten Spule des zweiten Verschlussteils unter Verwendung des Sperrstücks bereitzustellen, sind unterschiedliche Ausgestaltungen der Verschlussteile denkbar.

In einer ersten Variante kann die erste Spule an dem Sperrstück des ersten Verschlussteils angeordnet und zusammen mit dem Sperrstück in die ausgefahrene Position überführbar sein. Die erste Spule erstreckt sich dann vorteilhafterweise entlang einer Umfangsrichtung um die Schließrichtung an dem Sperrstück, während die zweite Spule sich entlang der Umfangsrichtung an dem zweiten Verschlussteil erstreckt. In der Schließstellung, in der das Sperrstück sich in seiner ausgefahrenen Position befindet, somit von dem Gehäuse des ersten Verschlussteils vorsteht und in eine Aufnahmeöffnung des zweiten Verschlussteils eingreift, greift die an dem Sperrstück angeordnete erste Spule in die zweite Spule ein und ist zumindest abschnittsweise von der zweiten Spule umfänglich umgeben (d.h. die erste Spule ist radial innerhalb der zweiten Spule angeordnet und befindet sich axial - gesehen in Richtung der Schließrichtung - zumindest abschnittsweise auf der gleichen Höhe wie die zweite Spule), so dass sich eine vorteilhafte induktive Kopplung der ersten Spule mit der zweiten Spule ergibt.

Zusätzlich kann für eine weitere Verbesserung der induktiven Kopplung der ersten Spule und der zweiten Spule an dem Sperrstück ein die erste Spule durchgreifender magnetischer Anker angeordnet sein, der beispielsweise aus einem ferromagnetischen Material, z.B. Beispiel Eisen, ausgeführt sein kann.

In einer zweiten Variante kann die erste Spule auch fest an dem Gehäuse des ersten Verschlussteils angeordnet sein. In diesem Fall trägt das Sperrstück, um eine induktive Kopplung der ersten Spule an dem ersten Verschlussteil mit der zweiten Spule an dem zweiten Verschlussteil mit einem hohen Wirkungsgrad zur Verfügung zu stellen, vorzugsweise einen magnetischen Anker, der zusammen mit dem Sperrstück in die ausgefahrene Position überführt werden kann. Über diesen magnetischen Anker, der beispielsweise aus einem ferromagnetischen Material in Form eines Eisenkerns ausgeführt sein kann, kann eine wirkungsvolle Kopplung der ersten Spule an dem ersten Verschlussteil mit der zweiten Spule an dem zweiten Verschlussteil bereitgestellt werden.

In diesem Fall erstreckt sich die erste Spule entlang einer Umfangsrichtung um die Schließrichtung an dem Gehäuse des ersten Verschlussteils und ist somit ortsfest an dem Gehäuse angeordnet. Die zweite Spule erstreckt sich entlang der Umfangsrichtung an einem Gehäuse des zweiten Verschlussteils, wobei die erste Spule und die zweite Spule in der Schließstellung (bei ausgefahrenem Sperrstück) jeweils von dem magnetischen Anker des Sperrstücks durchgriffen werden.

In beiden Varianten ist das Sperrstück vorzugsweise in einer Aufnahmekammer des Gehäuses des ersten Verschlussteils verschiebbar angeordnet. In der eingefahrenen Position steht das Sperrstück vorteilhafterweise nicht nach außen hin von dem Gehäuse vor, so dass, wenn die Verschlussteil voneinander gelöst sind, das Sperrstück in dem Gehäuse eingefasst ist und bei der Handhabung eines mit dem ersten Verschlussteil verbundenen Bauteils nicht stört.

Das Sperrstück wird entlang einer Bewegungsrichtung aus der Aufnahmekammer ausgefahren, wobei diese Bewegungsrichtung geradlinig oder auch gekrümmt sein kann und unterschiedlich von der Schließrichtung, z.B. quer zur Schließrichtung, gerichtet sein kann.

Das Sperrstück ist in seiner ausgefahrenen Position in die Schließrichtung in eine Aufnahmeöffnung des zweiten Verschlussteils einsteckbar und greift in der Schließstellung, in der das Verschlussteil mit dem zweiten Verschlussteil in Wirkverbindung steht, in die Aufnahmeöffnung des zweiten Verschlussteils ein. Das Sperrstück kann hierbei zumindest abschnittsweise zylindrisch ausgebildet sein und in der Schließstellung auch eine mechanische Verriegelung des ersten Verschlussteils mit dem zweiten Verschlussteil zur Verfügung stellen, im Rahmen derer das erste Verschlussteil zumindest quer zur Schließrichtung durch den Eingriff des Sperrstücks des ersten Verschlussteils in die Aufnahmeöffnung des zweiten Verschlussteils formschlüssig an dem zweiten Verschlussteil gehalten ist.
Das Überführen des Sperrstücks von der eingefahrenen Position in die ausgefahrene Position erfolgt vorzugsweise selbsttätig durch die Wirkung der magnetischen Mittel, die zwischen dem Sperrstück und dem zweiten Verschlussteil in magnetisch anziehender Weise wirken. Wird das erste Verschlussteil an das zweite Verschlussteil angesetzt, so erzeugen die magnetischen Mittel eine magnetische Anziehungskraft zwischen dem Sperrstück an dem ersten Verschlussteil und dem zweiten Verschlussteil, die das Überführen des Sperrstücks von seiner eingefahrenen Position in die ausgefahrene Position unterstützen oder sogar selbsttätig bewirken, so dass in der ausgefahrenen Position das Sperrstück mechanisch mit dem Federverriegelungselement verrastet und die Verschlussvorrichtung auf diese Weise verriegelt werden kann.

Die magnetischen Mittel können beispielsweise durch zwei (Permanent-)Magnete ausgebildet sein, von denen der eine an dem Sperrstück und der andere an dem zweiten Verschlussteil angeordnet ist. Denkbar ist aber auch, an dem einen von Sperrstück und zweitem Verschlussteil einen Magneten und an dem andern von Sperrstück und zweitem Verschlussteil einen magnetischen Anker aus ferromagnetischem Material, beispielsweise Eisen, vorzusehen.

Vorteilhafterweise sind die magnetischen Mittel so dimensioniert, dass beim Ansetzen des ersten Verschlussteils an das zweite Verschlussteil das Sperrstück in der ausgefahrenen Position zum rastenden Ineingriffbringen des Sperrstückes mit dem Federverriegelungselement gehalten wird. Hintergrund ist hier, dass beim Ansetzen des Sperrstückes an das Federverriegelungselement das Sperrstück das Federverriegelungselement in elastischer Weise beiseite drängt, um das Sperrstück mit einem Rastabschnitt formschlüssig mit einem korrespondierenden Rastabschnitt an dem Federverriegelungselement in Eingriff zu bringen. Die zum Beiseitedrängen des Federverriegelungselementes erforderliche Kraft sollte hierbei kleiner sein als die magnetische Anziehungskraft der magnetischen Mittel, so dass beim rastenden Ineingriffbringen das Sperrstück in seiner ausgefahrenen Position gehalten wird und nicht aufgrund der zum Herstellen der Verrastung erforderlichen Kraft in seine eingefahrene Position gedrängt wird.

Um das Sperrstück nach dem Öffnen der Verschlussvorrichtung selbsttätig in seine eingefahrene Position zurückzustellen, kann vorgesehen sein, das Sperrstück gegenüber dem Gehäuse des ersten Verschlussteils in Richtung der eingefahrenen Position vorzuspannen. Hierzu können gesonderte magnetische Vorspannmittel vorgesehen sein, die zwischen dem Sperrstück und dem Gehäuse des ersten Verschlussteils wirken und eine magnetische Anziehungskraft auf das Sperrstück in Richtung der eingefahrenen Position ausüben. Diese magnetische Anziehungskraft sollte hierbei, zumindest wenn das erste Verschlussteil hinreichend weit dem zweiten Verschlussteil angenähert ist, kleiner sein als die magnetische Anziehungskraft der zwischen dem Sperrstück und dem zweiten Verschlussteil wirkenden magnetischen Mittel, damit diese magnetischen Mittel in zuverlässiger Weise beim Ansetzen des ersten Verschlussteils an das zweite Verschlussteil das Sperrstück in seine ausgefahrene Position überführen können.

Die Vorspannung kann auch durch eine mechanische Feder bewirkt werden, die zwischen dem Sperrstück und dem Gehäuse des ersten Verschlussteils wirkt und das Sperrstück nach dem Öffnen der Verschlussvorrichtung in seine eingefahrene Position zurückstellt.

Die Verschlussvorrichtung ist vorteilhafterweise derart ausgebildet, dass zum Lösen der Verschlussvorrichtung das Federverriegelungselement in eine im Wesentlichen quer zur Schließrichtung gerichtete Öffnungsrichtung relativ zu dem Sperrstück zu verschieben oder zu verdrehen ist, um das Federverriegelungselement und das Sperrstück außer Eingriff zu bringen. Das Lösen der Verrastung erfolgt damit durch eine quer zur Schließrichtung gerichtete, näherungsweise geradlinige oder kreislinienförmige Bewegung des Federverriegelungselements und des Sperrstücks relativ zueinander.

Es ergibt sich eine Kreiskauffunktion: Zum Schließen wird das erste Verschlussteil mit seinem Sperrstück in die Schließrichtung an das Federverriegelungselement des zweiten Verschlussteils angesetzt, bis das Sperrstück mit dem Federverriegelungselement rastend in Eingriff schnappt. Beim Schließen bewegt sich das zweite Verschlussteil dabei nicht oder zumindest nicht wesentlich entlang der Öffnungsrichtung; lediglich das Federverriegelungselement wird elastisch beiseite gedrängt. Zum Öffnen wird hingegen das Federverriegelungselement in die Öffnungsrichtung relativ zu dem Sperrstück bewegt, wobei hierbei das Sperrstück und das Federverriegelungselement tangential mit ihren Rastabschnitten, die formschlüssig entgegen der Schließrichtung aneinander anliegen, außer Eingriff geschoben werden. Eine nennenswerte Spreizung des Federverriegelungselements erfolgt hierbei nicht.

Die Schließrichtung und die Öffnungsrichtung unterscheiden sich voneinander und sind auch nicht antiparallel zueinander gerichtet.

Zum Öffnen kann das zweite Verschlussteil insgesamt relativ zu dem ersten Verschlussteil bewegt werden, um das Sperrstück und das Federverriegelungselement außer Eingriff zu bringen. Denkbar und möglich ist aber auch, an dem zweiten Verschlussteil ein gesondertes Verstellelement vorzusehen, das entlang der Öffnungsrichtung verschiebbar oder verdrehbar an einem Gehäuse des zweiten Verschlussteils gelagert ist. An diesem Verstellelement ist das Federverriegelungselement angeordnet, so dass durch Betätigen des Verstellelementes das Federverriegelungselement relativ zu dem Sperrstück des ersten Verschlussteils bewegt werden kann. In der Schließstellung steht das Federverriegelungselement mit dem Sperrstück in Eingriff, so dass das erste Verschlussteil an dem zweiten Verschlussteil gehalten ist. Zum Öffnen der Verschlussvorrichtung kann dann das Verstellelement derart betätig werden, dass das Federverriegelungselement relativ zu dem Sperrstück bewegt und außer Eingriff mit dem Sperrstück gebracht wird.

Das Verstellelement kann beispielsweise nach Art eines Schlittens ausgebildet und an dem Gehäuse des zweiten Verschlussteils gelagert sein, wobei das Verstellelement in Richtung der Öffnungsrichtung relativ zu dem Gehäuse verstellbar ist und durch Betätigen des Verstellelements das Federverriegelungselement relativ zu dem Gehäuse bewegt wird. Das Öffnen der Verschlussvorrichtung erfolgt somit nicht durch eine Bewegung des zweiten Verschlussteils insgesamt, sondern durch Betätigen des Verstellelements des zweiten Verschlussteils, aufgrund dessen der Eingriff zwischen dem Sperrstück und dem Federverriegelungselement gelöst wird und das erste Verschlussteil von dem zweiten Verschlussteil entnommen werden kann.

Die magnetischen Mittel wirken in diesem Fall vorteilhafterweise zwischen dem Sperrstück des ersten Verschlussteils und dem Verstellelement des zweiten Verschlussteils, so dass die magnetischen Mittel auch eine Kraft auf das Verstellelement ausüben derart, dass das Verstellelement aufgrund der magnetischen Anziehungskraft zwischen dem Sperrstück und dem Verstellelement beim Ansetzen des ersten Verschlussteils an das zweite Verschlussteil in eine solche Stellung verstellt wird, in der das Sperrstück mit dem Federverriegelungselement in Eingriff gebracht werden kann.

Das Federverriegelungselement erstreckt sich vorteilhafterweise in eine Umfangsrichtung um die Schließrichtung und ist beispielsweise als ein um die Schließrichtung gebogener, zumindest abschnittsweise federnder Streifen ausgebildet, an dem ein Rastabschnitt zum rastenden Eingriff mit einem korrespondierenden Rastabschnitt an dem Sperrstück angeordnet ist. In der Schließstellung umgreift das Federverriegelungselement das Sperrstück in der Umfangsrichtung zumindest abschnittsweise, so dass durch diesen Umgriff das Sperrstück an dem Federverriegelungselement gehalten ist.

Das Federverriegelungselement ist in die Öffnungsrichtung umfänglich abschnittsweise geöffnet, so dass das Sperrstück durch eine Relativbewegung zwischen dem Federverriegelungselement und dem Sperrstück aus dem Umgriff mit dem Federverriegelungselement gelöst werden kann. Zum Ansetzen des Sperrstücks an das Federverriegelungselement zum Verriegeln des ersten Verschlussteil relativ zum zweiten Verschlussteil wird das Sperrstück somit in die Schließrichtung an das Federverriegelungselement angesetzt und drängt hierbei das Federverriegelungselement auf elastische Weise in Richtung eines Aufweitens quer zur Schließrichtung beiseite, so dass das Federverriegelungselement in rastenden Eingriff mit dem Sperrstück gelangt und in einer verriegelnden Eingriffsstellung das Sperrstück entlang der Umfangsrichtung umgreift. Zum Lösen wird das Federverriegelungselement dann in die Öffnungsrichtung relativ zu dem Sperrstück bewegt, so dass das Sperrstück durch eine Relativbewegung quer zur Schließrichtung außer Eingriff mit dem Federverriegelungselement gelangt.

In einer Ausführungsform einer induktiven Kopplungsvorrichtung kann das erste Verschlussteil zwei Sperrstücke umfassen, die jeweils verschiebbar an dem Gehäuse angeordnet sind und denen jeweils eine elektrische Spule des ersten Verschlussteils zugeordnet ist. Hierbei kann an jedem Sperrstück eine elektrische Spule angeordnet sein, die zusammen mit dem Sperrstück verfahren werden kann. Denkbar ist aber auch, jeweils eine elektrische Spule im Bereich eines Sperrstücks an dem Gehäuse des ersten Verschlussteils vorzusehen, wobei das Sperrstück in diesem Fall als magnetischer Anker ausgestaltet sein kann, um eine vorteilhafte induktive Kopplung mit einer an dem zweiten Verschlussteil angeordneten Spule bereitzustellen. Jedes Sperrstück greift in der Schließstellung in eine gesonderte Aufnahmeöffnung des zweiten Verschlussteils ein, wobei im Bereich jeder dieser Aufnahmeöffnungen eine elektrische Spule angeordnet ist, so dass über jedes Sperrstück eine induktive Kopplung einer an dem ersten Verschlussteil angeordneten ersten Spule und einer an dem zweiten Verschlussteil angeordneten zweiten Spule bereitgestellt wird.

Zur Erhöhung des Wirkungsgrads der induktiven Kopplung kann an jedem oder auch nur an einem der Sperrstücke ein magnetischer Anker vorgesehen sein. Dies betrifft sowohl die Variante, bei der Spulen an den Sperrstücken angeordnet sind, als auch die Variante, bei der die Spulen ortsfest an dem Gehäuse des ersten Verschlussteils im Bereich der Sperrstücke angeordnet sind.

Über die beiden Sperrstücke, denen jeweils eine separate Spule des ersten Verschlussteils zugeordnet ist, können zwei induktiv gekoppelte Kanäle bereitgestellt werden. Diese beiden Kanäle können jeweils zur Übertragung elektrischer Energie von einem Verschlussteil hin zum anderen Verschlussteil zur elektrischen Versorgung eines mit einem der Verschlussteile verbundenen elektrischen Geräts verwendet werden. Denkbar ist aber auch, einen der Kanäle zur Übertragung elektrischer Energie und den anderen der Kanäle zur elektronischen Datensignalübertragung zu verwenden. Die Energieübertragung erfolgt hierbei beispielsweise in niederfrequenter Weise (im Hz- oder kHz-Bereich), wobei für eine effektive Energieübertragung ein magnetischer Anker an dem hierfür verwendeten Sperrstück vorgesehen sein kann. Die elektronische Datensignalübertragung kann demgegenüber in hochfrequenter Weise (beispielsweise im MHz- oder GHz-Bereich) erfolgen, wobei hierfür an dem Sperrstück vorteilhafterweise kein magnetischer Anker vorgesehen ist, der möglicherweise die Qualität einer hochfrequenten Datensignalübertragung beeinträchtigen könnte.

Der der Erfindung zugrunde liegende Gedanke soll nachfolgend anhand der in den Figuren dargestellten Ausführungsbeispiele näher erläutert werden. Es zeigen:
- Fig. 1: eine Explosionsansicht einer Verschlussvorrichtung;
- Fig. 2: eine Explosionsansicht der Verschlussvorrichtung gemäß Fig. 1, betrachtet in anderer Perspektive;
- Fig. 3A: eine Draufsicht auf die Verschlussvorrichtung vor dem Schließen;
- Fig. 3B: eine Schnittansicht der Anordnung gemäß Fig. 3A entlang der Linie A-A;
- Fig. 4A: eine Draufsicht auf die Verschlussvorrichtung vor dem Schließen;
- Fig. 4B: eine Schnittansicht durch die Anordnung gemäß Fig. 4A entlang der Linie A-A;
- Fig. 5A: eine Draufsicht auf die Verschlussvorrichtung in einer Schließstellung;
- Fig. 5B: eine Schnittansicht durch die Anordnung gemäß Fig. 5A entlang der Linie A-A;
- Fig. 6A: eine Draufsicht auf die Verschlussvorrichtung in entriegeltem Zustand;
- Fig. 6B: eine Schnittansicht der Anordnung gemäß Fig. 6A entlang der Linie A-A;
- Fig. 7: eine Explosionsansicht eines weiteren Ausführungsbeispiels einer Verschlussvorrichtung;
- Fig. 8: eine Explosionsansicht der Verschlussvorrichtung gemäß Fig. 7, betrachtet aus anderer Perspektive;
- Fig. 9A: eine Draufsicht auf die Verschlussvorrichtung vor dem Schließen;
- Fig. 9B: eine Schnittansicht der Anordnung gemäß Fig. 9A entlang der Linie A-A;
- Fig. 10A: eine Draufsicht auf die Verschlussvorrichtung vor dem Schließen;
- Fig. 10B: eine Schnittansicht der Anordnung gemäß Fig. 10A entlang der Linie A-A;
- Fig. 11A: eine Draufsicht auf die Verschlussvorrichtung in der Schließstellung;
- Fig. 11B: eine Schnittansicht der Anordnung gemäß Fig. 11A entlang der Linie A-A;
- Fig. 12A: eine Draufsicht der Verschlussvorrichtung in entriegeltem Zustand;
- Fig. 12B: eine Schnittansicht der Anordnung gemäß Fig. 12A entlang der Linie A-A;
- Fig. 13A: eine schematische Ansicht eines Ausführungsbeispiels einer Vorrichtung zur induktiven Kopplung zweier Bauteile, in einem geöffneten Zustand, in dem sich ein Sperrstück an einem ersten Verschlussteil in einer eingefahrenen Position befindet;
- Fig. 13B: eine schematische Ansicht der Vorrichtung, darstellend das Sperrstück in einer ausgefahrenen Position;
- Fig. 13C: eine schematische Ansicht der Vorrichtung in einer Schließstellung;
- Fig. 14A: eine schematische Ansicht eines weiteren Ausführungsbeispiels einer Vorrichtung zur induktiven Kopplung, in einem geöffneten Zustand;
- Fig. 14B: eine schematische Ansicht der Vorrichtung, bei ausgefahrenem Sperrstück;
- Fig. 14C: eine Ansicht der Vorrichtung in der Schließstellung;
- Fig. 15: eine schematische Ansicht eines weiteren Ausführungsbeispiels einer Vorrichtung zur induktiven Kopplung;
- Fig. 16A: eine schematische Ansicht eines weiteren Ausführungsbeispiels einer Verschlussvorrichtung zur induktiven Kopplung zweier Bauteile, in geöffnetem Zustand;
- Fig. 16B: eine schematische Ansicht der Vorrichtung, bei aneinander angesetzten Verschlussteilen;
- Fig. 16C: eine Ansicht der Vorrichtung in der Schließstellung;
- Fig. 17A: eine schematische Ansicht eines weiteren Ausführungsbeispieles einer Verschlussvorrichtung, in geöffnetem Zustand;
- Fig. 17B: eine Ansicht der Vorrichtung in der Schließstellung;
- Fig. 18A: ein gegenüber der Ausführungsform gemäß Fig. 17A, 17B modifiziertes Ausführungsbeispiel einer Vorrichtung zur induktiven Kopplung zweier Bauteile, in geöffnetem Zustand;
- Fig. 18B: eine Ansicht der Vorrichtung gemäß Fig. 18A, in der Schließstellung;
- Fig. 19: eine Explosionsansicht eines weiteren Ausführungsbeispiels einer Verschlussvorrichtung zur induktiven Kopplung zweier Bauteile;
- Fig. 20: eine Explosionsansicht der Vorrichtung gemäß Fig. 19, aus anderer Perspektive;
- Fig. 21A, 21B: Ansichten der Vorrichtung gemäß Fig. 19 und 20 in einem geöffneten Zustand;
- Fig. 22A, 22B: Ansichten der Vorrichtung gemäß Fig. 19 und 20 in geöffnetem Zustand, jedoch bei ausgefahrenen Sperrstücken;
- Fig. 23A,: 23B Ansichten der Vorrichtung gemäß Fig. 19 und 20 in der Schließstellung und
- Fig. 24A, 24B: Ansichten der Vorrichtung gemäß Fig. 19 und 20 in einem entriegelten Zustand.

Bei den nachfolgend beschriebenen Ausführungsbeispielen werden für Bauteile gleicher Funktion, soweit dies zweckdienlich ist, gleiche Bezugszeichen verwendet.

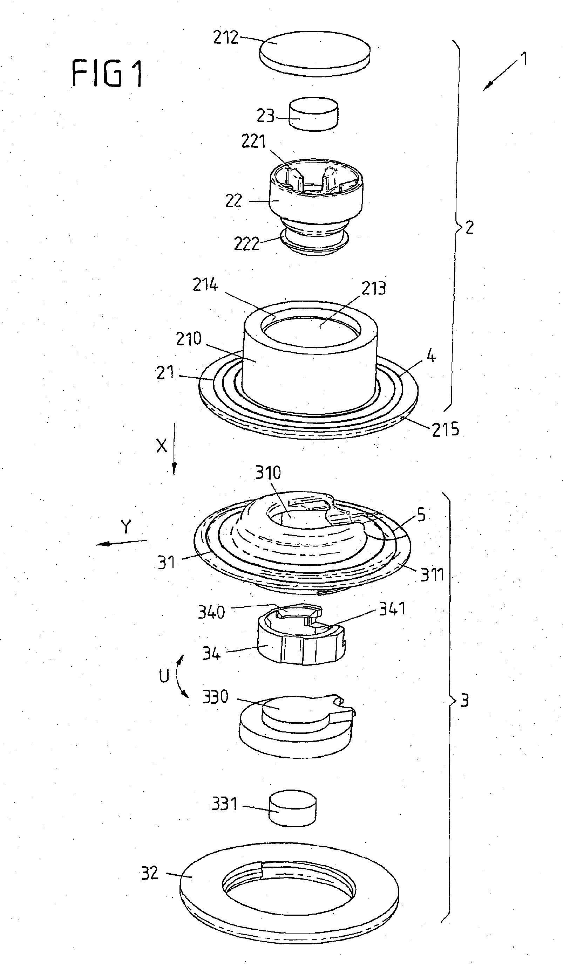

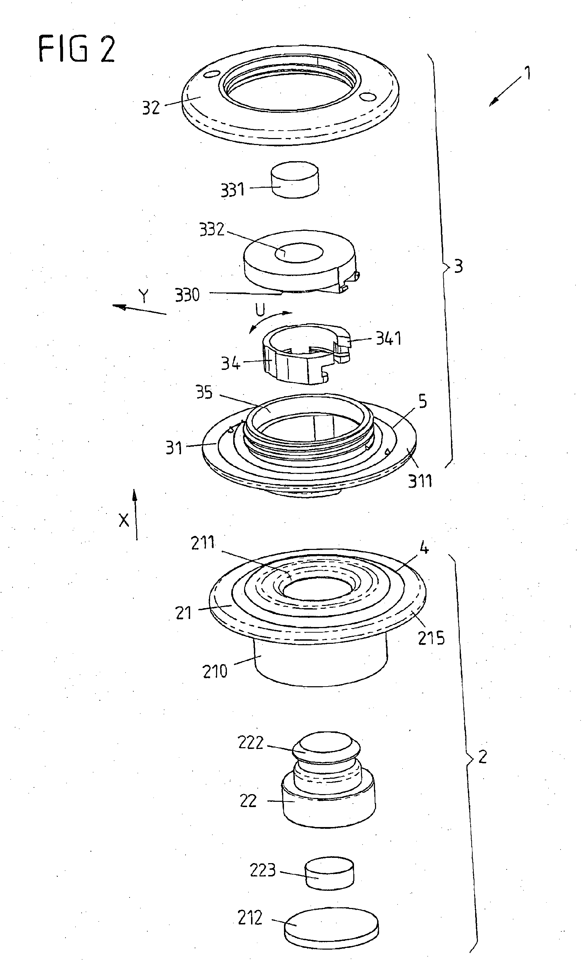

Ein erstes Ausführungsbeispiel einer Verschlussvorrichtung 1, dargestellt in Fig. 1 bis 6, weist ein erstes Verschlussteil 2 und ein zweites Verschlussteil 3 auf, die in einer geöffneten Stellung getrennt voneinander vorliegen, zum Schließen in eine Schließrichtung X aneinander angesetzt werden können und in einer Schließstellung miteinander verriegelt sind.

Das erste Verschlussteil 2 umfasst ein Gehäuse 21 mit einem Gehäuseabschnitt 210, der eine Aufnahmekammer 213 einfasst. In dieser Aufnahmekammer 213 ist ein Sperrstück 22 verschiebbar angeordnet.

Das zweite Verschlussteil 3 umfasst ein Gehäuse 31, an das ein Gehäuseteil 32 angesetzt ist. An dem Gehäuse 31 ist ein Halteabschnitt 330 angeordnet, der ein Federverriegelungselement 34 drehfest an einer Aufnahmeöffnung 310 des Gehäuses 31 hält.

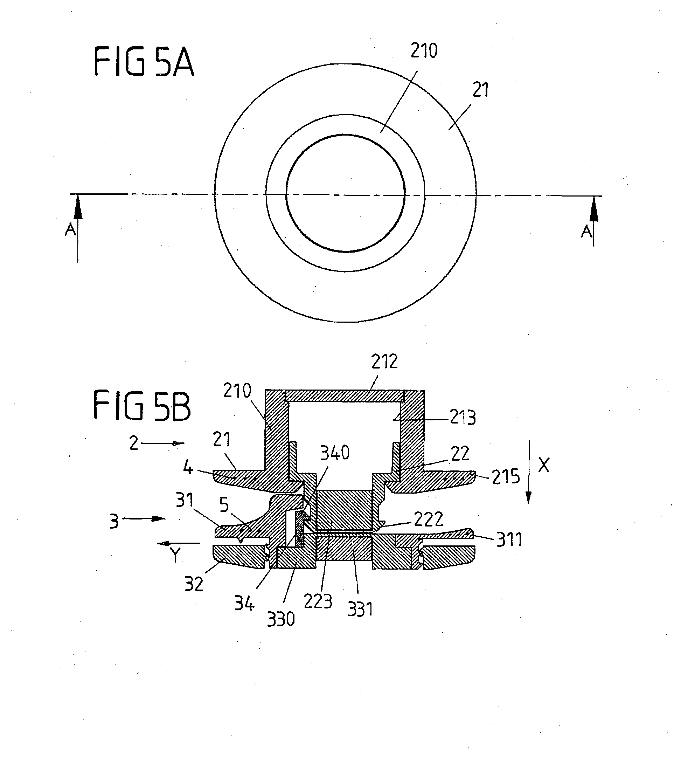

An dem ersten Verschlussteil 2 und an dem zweiten Verschlussteil 3 ist jeweils eine aus mehreren Windungen gebildete elektrische Spule 4, 5 vorgesehen, die beispielsweise in das Gehäuse 21 bzw. das Gehäuse 31 eingespritzt, an das Gehäuse 21 bzw. 31 aufgeklebt oder in sonstiger Weise an dem Gehäuse 21 bzw. 31 befestigt ist. Die Spule 4 des ersten Verschlussteils 2 erstreckt sich in eine Umfangsrichtung U um die Schließrichtung X an einem Gehäuseabschnitt 215 um den Gehäuseabschnitt 210, während die Spule 5 des zweiten Verschlussteils 3 sich an einem Gehäuseabschnitt 311 um die Aufnahmeöffnung 310 erstreckt. In einer Schließstellung der Verschlussvorrichtung 1, dargestellt in Fig. 5B, stehen sich diese Spulen 4, 5 so gegenüber, dass sie auf elektromagnetische Weise (induktiv) miteinander gekoppelt sind und in niederfrequenter Weise (im Hz- oder kHz-Bereich) zu einer Energieübertragung oder in hochfrequenter Weise (im MHz- oder GHz-Bereich) zu einer Datensignalübertragung verwendet werden können. Eine der Spulen 4, 5 kann hierbei mit einem elektrischen Versorgungssystem oder einer Datenquelle verbunden sein, während die andere der Spulen 4, 5 mit einem elektrisch zu versorgenden oder Daten empfangenden Endgerät, beispielsweise einem Mobiltelefon oder einem Navigationsgerät zur Verwendung in einem Fahrzeug, verbunden sein kann.

Das an dem Gehäuse 21 des ersten Verschlussteils 2 angeordnete Sperrstück 22 und das an dem Gehäuse 31 des zweiten Verschlussteils 3 angeordnete Federverriegelungselement 34 dienen zum mechanischen Verriegeln des ersten Verschlussteils 2 mit dem zweiten Verschlussteil 3 in der Schließstellung. Das Sperrstück 22 und das Federverriegelungselement 34 weisen hierzu jeweils einen oder mehrere Rastabschnitte 222 bzw. 340 auf, die zum Verriegeln des ersten Verschlussteils 2 mit dem zweiten Verschlussteil 3 rastend miteinander in Eingriff gebracht werden können und in der Schließstellung eine formschlüssige Verbindung des Sperrstücks 22 mit dem Federverriegelungselement 34 bewirken.

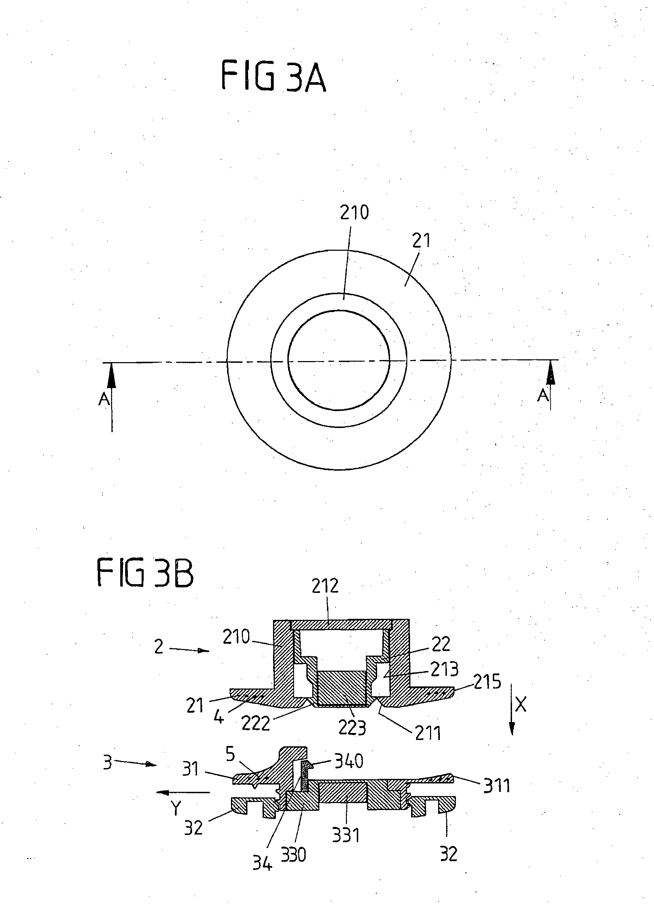

Das erste Verschlussteil 2 kann in eine Schließrichtung X an das zweite Verschlussteil 3 angesetzt werden, um die Verschlussvorrichtung 1 in ihre Schließstellung zu überführen, wie nachfolgend anhand von Fig. 3 bis 6 noch im Einzelnen erläutert werden soll. Das Federverriegelungselement 34 erstreckt sich hierbei entlang einer Umfangsrichtung U um die Schließrichtung X und ist umfänglich durch eine Öffnung 341 abschnittsweise geöffnet. Dies bewirkt, dass das Sperrstück 22 in die Schließrichtung X einerseits in vergleichsweise einfacher Weise ohne großen Kraftaufwand an das Federverrieglungselement 34 angesetzt werden kann, indem das Sperrstück 22 mit seinem Rastabschnitt 222 (der umfänglich um das Sperrstück 22 umläuft) in die Schließrichtung X an den Rastabschnitt 340 des Federverriegelungselements 34 angesetzt wird und hierdurch das Federverriegelungselement 34 quer zur Schließrichtung X aufweitet, so dass der Rastabschnitt 222 des Sperrstücks 22 mit dem Rastabschnitt 340 des Federverriegelungselements 34 rastend in Eingriff gelangt.

Zum Öffnen wird das Federverriegelungselement 34 in eine Öffnungsrichtung Y, die im Wesentlichen quer zur Schließrichtung X gerichtet ist, relativ zu dem Sperrstück 22 verschoben, so dass das Sperrstück 22 durch die umfängliche Öffnung 341 an dem Federverriegelungselement 34 geführt wird und außer Eingriff mit dem Federverriegelungselement 34 gelangt.

Fig. 3A und 3B zeigen die Verschlussvorrichtung 1 vor dem Schließen der Verschlussvorrichtung 1. In diesem Zustand ist das Sperrstück 22 in die Aufnahmekammer 213 des Gehäuses 21 eingefahren und befindet sich somit in einem eingefahrenen Zustand, in dem es nicht von dem Gehäuse 21 nach außen hin vorsteht. An einer Aufnahmeöffnung 214 des Gehäuseabschnitts 210 (siehe Fig. 1) ist ein Magnet 212 angeordnet, der magnetisch anziehend einem Magneten 223 des Sperrstücks 22 gegenübersteht (siehe Fig. 3B). Aufgrund der magnetischen Anziehungskraft zwischen den Magneten 212, 223 wird das Sperrstück 22 in der geöffneten Stellung der Verschlussvorrichtung 1 zunächst in seiner eingefahrenen Position gehalten.

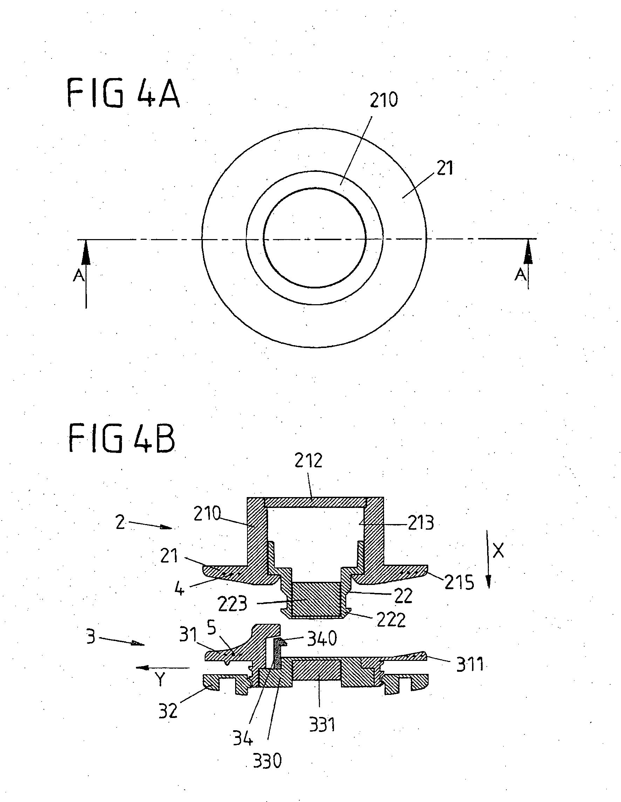

Wird, wie in Fig. 4A und 4B dargestellt, das erste Verschlussteil 2 in die Schließrichtung X dem zweiten Verschlussteil 3 angenähert, so wird das Sperrstück 22 aus seiner eingefahrenen Position in eine ausgefahrene Position, wie in Fig. 4B dargestellt, überführt. Dies erfolgt in automatischer Weise aufgrund einer magnetischen Anziehungskraft zwischen dem Magneten 223, der an dem Sperrstück 22 angeordnet ist, und einem Magneten 331, der an dem Halteabschnitt 330 an dem Gehäuse 31 des zweiten Verschlussteils 3 angeordnet ist.

In der ausgefahrenen Position erstreckt sich das Sperrstück 22 durch eine Öffnung 211 an dem Gehäuse 21 hindurch und steht von dem Gehäuse 21 nach außen hin vor. Das Sperrstück 22 liegt dabei an dem die Aufnahmekammer 213 in Schließrichtung X begrenzenden Randabschnitt der Öffnung 211 an, so dass durch die Umrandung der Öffnung 211 eine Endstellung für die ausgefahrene Stellung definiert ist.

Die Magnete 223, 331 verwirklichen magnetische Mittel zum Erzeugen einer Anziehungskraft zwischen dem Sperrstück 22 und dem zweiten Verschlussteil 3 und erfüllen zweierlei Funktion. Zum einen bewirken die magnetischen Mittel 223, 331, dass das Sperrstücke 22 beim Ansetzen des ersten Verschlussteils 2 an das zweite Verschlussteil 3 aus seiner eingefahrenen Position (siehe Fig. 3B) in seine ausgefahrene Position (siehe Fig. 4B) überführt wird. Zum anderen erzeugen die magnetischen Mittel 223, 331 eine magnetische Anziehungskraft, die das Schließen der Verschlussvorrichtung 1 magnetisch unterstützt und das Sperrstück 22 in Eingriff mit dem Federverriegelungselement 34 zieht, so dass die mechanische Verrastung des Sperrstücks 22 mit dem Federverriegelungselement 34 bei geeigneter Dimensionierung der Magnete 223, 331 in weitestgehend selbsttätiger Weise hergestellt werden kann.

Die magnetischen Mittel in Form der Magnete 223, 331 sind so dimensioniert, dass beim Ansetzen des Sperrstücks 22 an das Federverriegelungselement 34 das Sperrstück 22 nicht in seine eingefahrene Position zurückgestellt wird, sondern der Rastabschnitt 222 des Sperrstücks 22 in Eingriff mit dem Rastabschnitt 340 des Federverriegelungselements 34 gelangen und hierzu das Federverriegelungselement 34 in Richtung eines Aufweitens beiseite drängen kann.

Fig. 5A und 5B zeigen die Verschlussvorrichtung 1 in ihrer Schließstellung, in der die Rastabschnitte 222, 340 des Sperrstücks 22 und des Federverriegelungselements 34 rastend miteinander in Eingriff stehen, so dass über den Eingriff des Sperrstücks 22 mit dem Federverriegelungselement 34 das erste Verschlussteil 2 in mechanisch verrasteter Weise an dem zweiten Verschlussteil 3 gehalten ist.

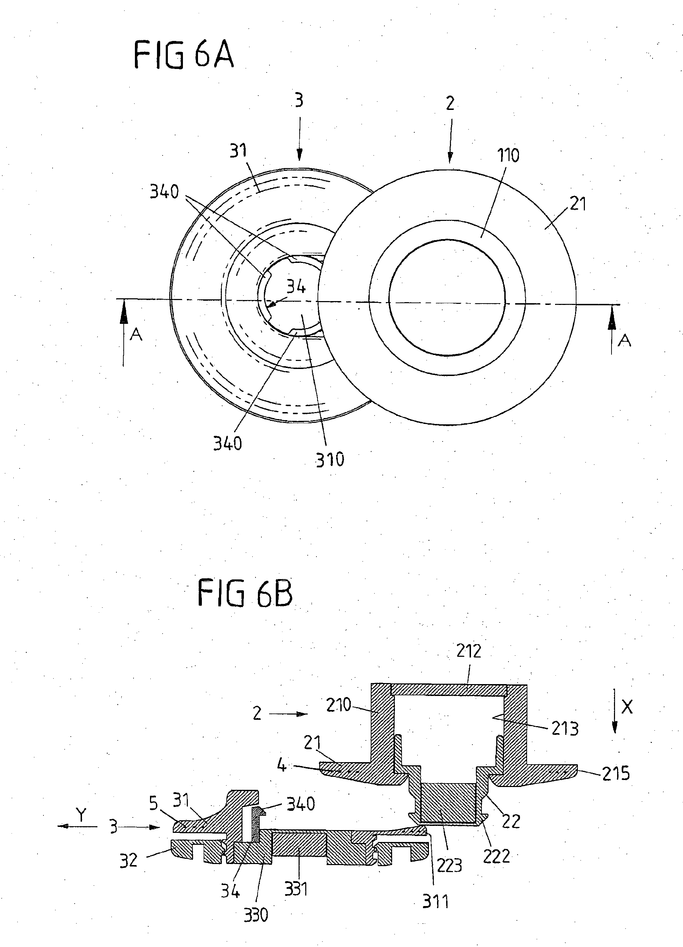

Zum Öffnen der Verschlussvorrichtung 1 werden das Sperrstück 22 und das Federverriegelungselement 34 entlang der Öffnungsrichtung Y relativ zueinander verschoben, wie dies in Fig. 6A und 6B dargestellt ist. Hierzu wird das zweite Verschlussteil 3 zusammen mit dem Federverriegelungselement 34 in die Öffnungsrichtung Y relativ zu dem ersten Verschlussteil 2 mit dem daran angeordneten Sperrstück 22 bewegt, so dass das Sperrstück 22 durch die umfängliche Öffnung 341 an dem Federverriegelungselement 34 tritt und außer Eingriff mit dem Federverriegelungselement 34 gelangt.

In entriegeltem Zustand, dargestellt in Fig. 6A und 6B, ist das erste Verschlussteil 2 nicht mehr an dem zweiten Verschlussteil 3 gehalten, so dass die Verschlussteile 2, 3 voneinander entnommen werden können.

Durch Entnehmen des ersten Verschlussteils 2 von dem zweiten Verschlussteil 3 werden zudem die Magnete 223, 331 am Sperrstück 22 bzw. am Gehäuse 31 voneinander entfernt, so dass die magnetische Anziehungskraft zwischen diesen Magneten 223, 331 abgeschwächt wird. Ist das erste Verschlussteil 2 hinreichend weit von dem zweiten Verschlussteil 3 entfernt, so übersteigt die magnetische Anziehungskraft der zwischen dem Gehäuse 21 des ersten Verschlussteils 2 und dem Sperrstück 22 wirkenden Magnete 212, 223 die magnetische Anziehungskraft der Magnete 223, 331, so dass aufgrund der magnetischen Anziehungskraft zwischen den Magneten 212, 223 das Sperrstück 22 hin zu dem Magneten 212 an dem Gehäuseabschnitt 210 des Gehäuse 21 des ersten Verschlussteils 2 gezogen und damit in seine eingefahrene Position überführt wird (siehe Fig. 3B).

In der eingefahrenen Position steht, wie gesagt, das Sperrstück 22 nicht oder zumindest nicht störend von dem Gehäuse 21 nach außen hin vor, so dass das Sperrstück 22 bei der Handhabung eines Bauteils, mit dem das erste Verschlussteil 2 verbunden ist, nicht hinderlich ist und zudem den ästhetischen Gesamteindruck dieses Bauteils (z.B. bei Verwendung an einer Handtasche oder dergleichen) nicht beeinträchtigt.

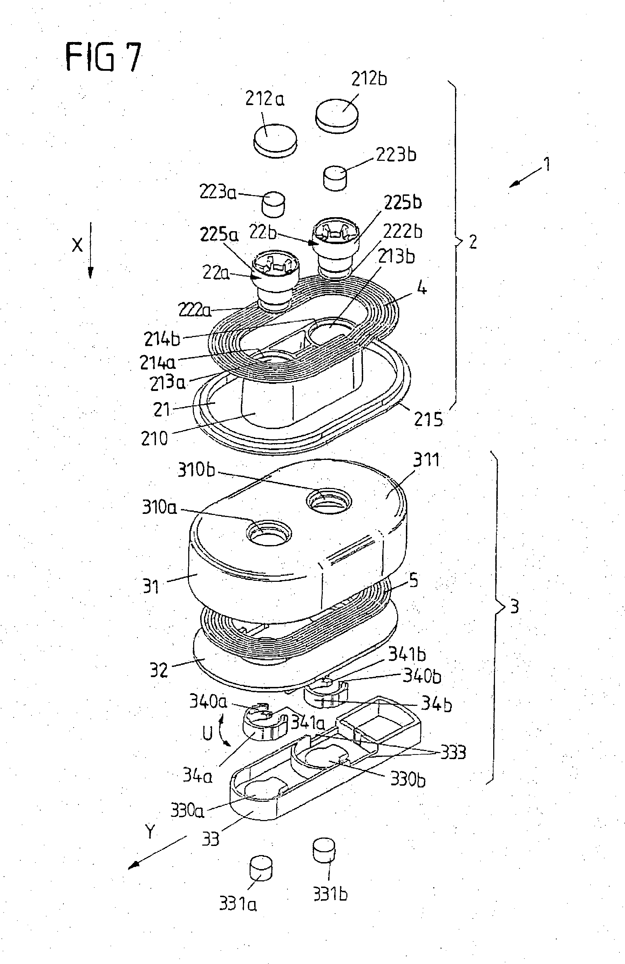

Fig. 7 bis 12 zeigen ein weiteres Ausführungsbeispiel einer Verschlussvorrichtung 1, das sich im Wesentlichen dadurch von dem Ausführungsbeispiel gemäß Fig. 1 bis 6 unterscheidet, dass an einem Gehäuse 21 eines ersten Verschlussteils 2 zwei Sperrstücke 22a, 22b und an einem Gehäuse 31 eines zweiten Verschlussteils 3 zwei Federverriegelungselemente 34a, 34b vorgesehen sind und somit eine zweifache mechanische Verriegelung der Verschlussteile 2, 3 miteinander herstellbar ist.

Die Sperrstücke 22a, 22b greifen in einer Schließstellung in Aufnahmeöffnungen 310a, 310b des zweiten Verschlussteils 3 ein und sind mit den Federverriegelungselementen 34a, 34b verrastet, so dass das erste Verschlussteil 2 in der Schließstellung mechanisch mit dem zweiten Verschlussteil 3 verriegelt ist.

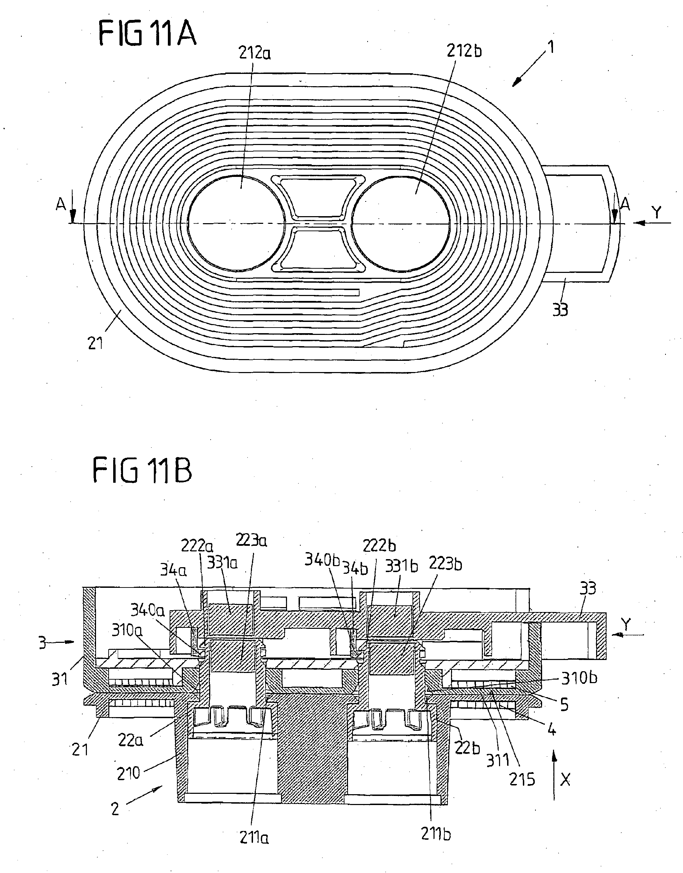

Das erste Verschlussteil 2 und das zweite Verschlussteil 3 weisen jeweils eine elektrische Spule 4, 5 auf, die einerseits beispielsweise mit einem elektrischen Versorgungssystem oder einer Datenquelle oder andererseits mit einem elektrisch zu versorgendem oder Daten empfangendem Endgerät wie einem Mobiltelefon oder einem Navigationsgerät verbunden sein können. Die Spule 4 des ersten Verschlussteils 2 erstreckt sich an einem Gehäuseabschnitt 215 um den Gehäuseabschnitt 210 des Gehäuses 21, während sich die Spule 5 des zweiten Verschlussteils 5 an einem Gehäuseabschnitt 311 des Gehäuses 31 um die Aufnahmeöffnungen 310a, 310b herum erstreckt und somit beide Aufnahmeöffnungen 310a, 310b einfasst. In der Schließstellung, dargestellt in Fig. 11B, stehen sich diese Spulen 4, 5 so gegenüber, dass sie elektromagnetisch miteinander gekoppelt sind und ein Stromfluss in der einen der Spulen 4, 5 eine Spannung in der anderen der Spulen 4, 5 induziert.

In der Schließstellung erstrecken sich die Gehäuseabschnitte 215, 311 in parallelen Ebenen und liegen flächig aneinander an.

Das erste Verschlussteil 2 weist zwei Sperrstücke 22a, 22b auf, die an einem Gehäuseabschnitt 210 des Gehäuses 21 jeweils in einer Aufnahmekammer 213a, 213b angeordnet sind. Jedes Sperrstück 22a, 22b weist einen Rastabschnitt 222a, 222b auf und trägt einen Magneten 223a, 223b.

An Aufnahmeöffnungen 214a, 214b des Gehäuseabschnitts 210 ist jeweils ein Magnet 212a, 212b angeordnet, der die Aufnahmekammer 213a, 213b rückseitig (d.h. zu einer von dem anderen, zweiten Verschlussteil 3 in der Schließstellung abgewandten Seiten hin) verschließt (vergleiche Fig. 7).

Das zweite Verschlussteil 3 weist ein Gehäuse 31 auf, an das ein Gehäuseteil 32 angesetzt ist. An dem Gehäuseteil 32, das fest mit dem Gehäuse 31 verbunden ist, ist ein Verstellelement 33 angeordnet, das einerseits zwei Federverriegelungselemente 34a, 34b an Halteabschnitten 330a, 330b in drehfester Weise trägt und andererseits über Aufnahmeöffnungen 232a, 232b mit Magneten 331 a, 331 b verbunden ist.

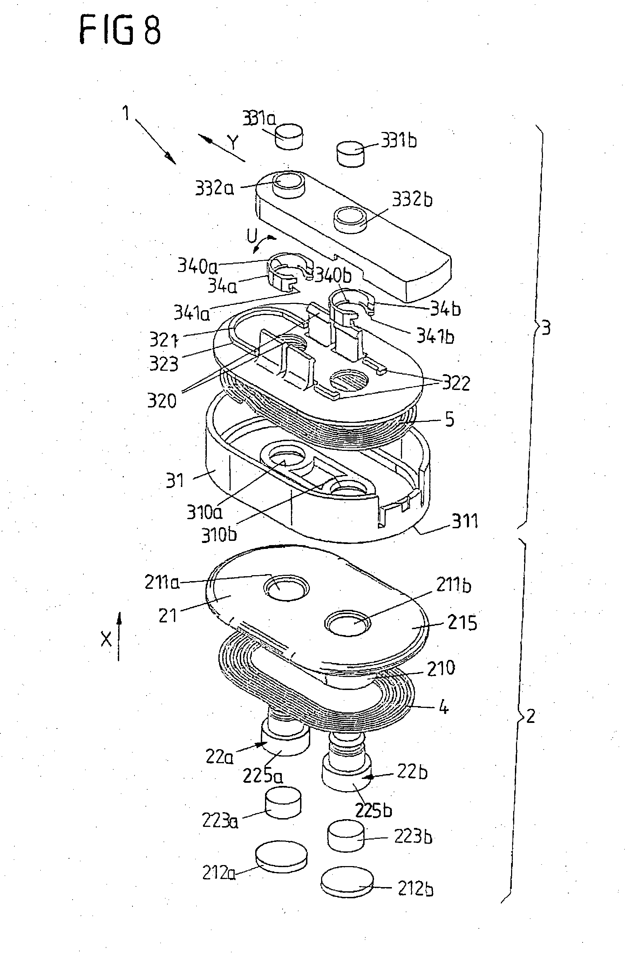

Das Verstellelement 33 ist entlang der Öffnungsrichtung Y über Formschlusselemente 320 verschiebbar an dem Gehäuseteil 32 gehalten und kann entlang von Längsführungsabschnitten 323 relativ zu dem Gehäuseteil 32 verschoben werden (siehe Fig. 8). Endstellungen des Verstellelements 33 werden entlang der Öffnungsrichtung Y einerseits durch einen Anschlagsabschnitt 321 und andererseits durch Anschläge 322, die in Aussparungen 333 an dem Verstellelement 33 einliegen, definiert.

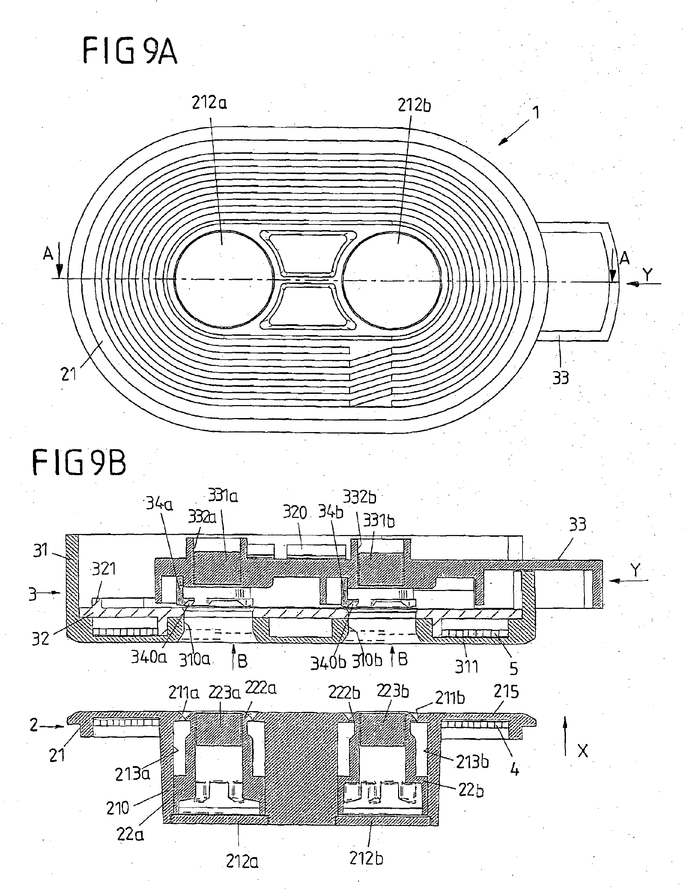

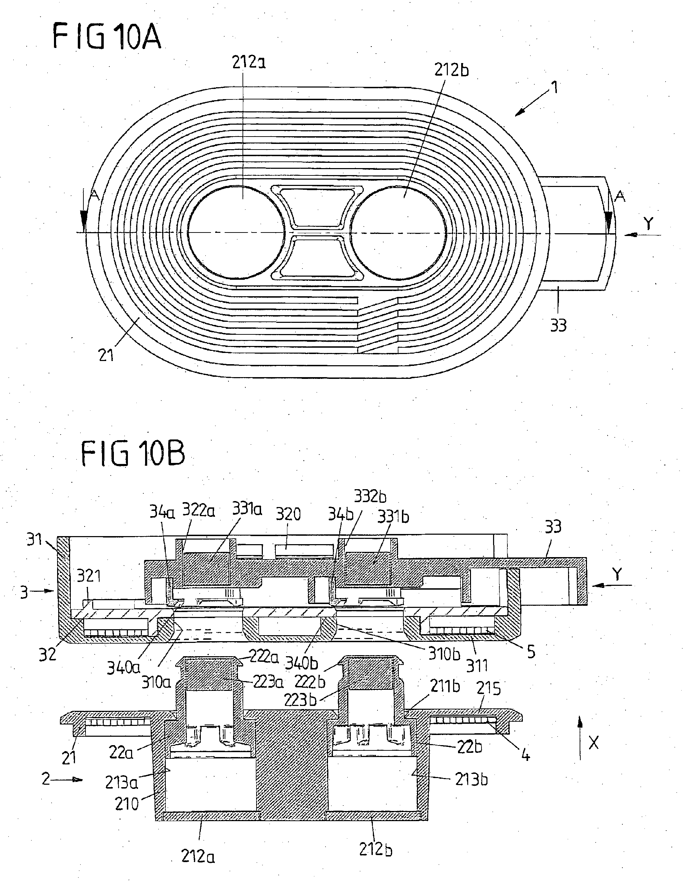

Fig. 9A und 9B zeigen die Verschlussvorrichtung 1 in einem Zustand vor dem Schließen. In diesem Zustand sind die Sperrstücke 22a, 22b des ersten Verschlussteils 2 in die Aufnahmekammern 213a, 213b an dem Gehäuseabschnitt 210 eingefahren und stehen nicht oder zumindest nicht störend über das Gehäuse 21 hinaus nach außen hin vor. Wird, analog wie vorangehend für das Ausführungsbeispiel gemäß Fig. 1 bis 6 beschrieben, das erste Verschlussteil 2 dem zweiten Verschlussteil 3 angenähert, so bewirken magnetische Anziehungskräfte zwischen den Magneten 223a, 223b, 231a, 231 b an den Sperrstücken 22a, 22b einerseits und an dem Verstellelement 33 andererseits, dass die Sperrstücke 22a, 22b aus ihrer eingefahrenen Position in eine in Fig. 10A und 10B dargestellte ausgefahrene Position überführt werden.

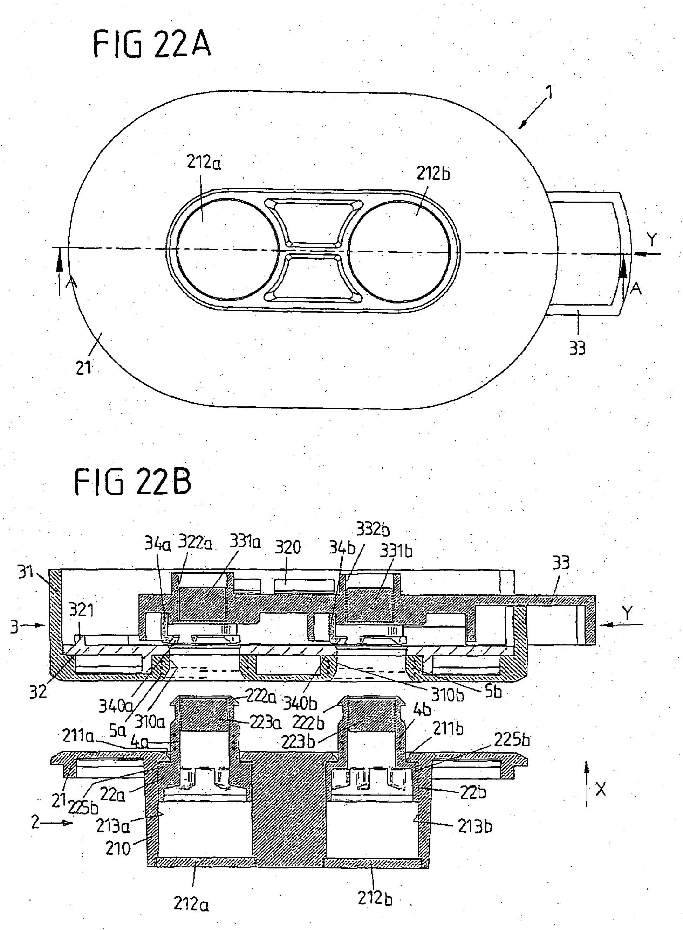

In der ausgefahrenen Stellung erstrecken sich die Sperrstücke 22a, 22b jeweils durch Öffnung 211 a, 211b an dem Gehäuse 211 hindurch und stehen nach außen hin von dem Gehäuse 21 in Richtung des zweiten Verschlussteils 3 vor. Die Sperrstücke 22a, 22b liegen dabei jeweils mit Flanschen 225a, 225b an einem die zugeordnete Öffnung 211 a, 211b begrenzenden Randabschnitt an, so dass über den Flansch 225a, 225b ein Anschlag für die ausgefahrene Position definiert ist (Fig. 22B).

In dieser ausgefahrenen Position können die Sperrstücke 22a, 22b in die Aufnahmeöffnungen 310a, 310b an dem Gehäuse 31 des zweiten Verschlussteils 3 eingeführt werden, um in rastenden Eingriff mit den Federverriegelungselementen 34a, 34b gebracht zu werden. In verrastetem Zustand, entsprechend der Schließstellung der Verschlussvorrichtung 1 und dargestellt in Fig. 11A und 11B, sind die Rastabschnitte 222a, 222b der Sperrstücke 22a, 22b dann mit den Rastabschnitten 340a, 340b der Federverriegelungselemente 34a, 34b in Eingriff, so dass über diesen Eingriff das erste Verschlussteil 2 in rastender, formschlüssiger Weise an dem zweiten Verschlussteil 3 gehalten ist.

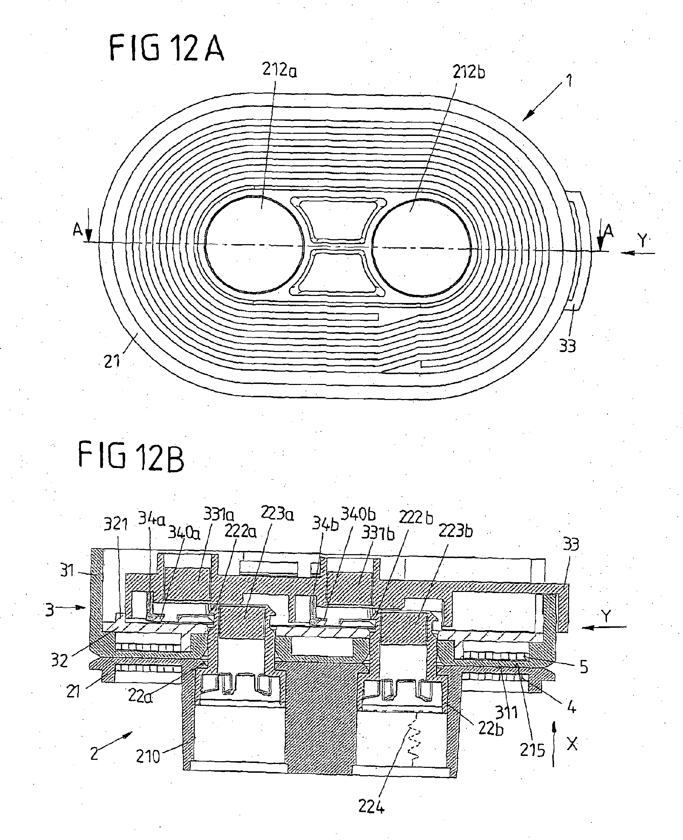

Um die Verschlussvorrichtung 1 zu öffnen, wird das Verstellelement 33 zusammen mit den daran angeordneten Federverriegelungselementen 34a, 34b in die Öffnungsrichtung Y relativ zu den Sperrstücken 22a, 22b bewegt, wie dies in Fig. 12A, 12B dargestellt ist. Die Sperrstücke 22a, 22b werden dadurch durch umfängliche Öffnungen 341 a, 341 b der Federverriegelungselemente 34a, 34b bewegt und gelangen außer Eingriff mit den Federverriegelungselementen 34a, 34b, so dass die Verriegelung zwischen dem ersten Verschlussteil 2 und dem zweiten Verschlussteil 3 aufgehoben ist und die Sperrstücke 22a, 22b aus den Aufnahmeöffnungen 310a, 310b des Gehäuses 31 des zweiten Verschlussteils 3 entnommen werden können, um das erste Verschlussteil 2 von dem zweiten Verschlussteil 3 zu entfernen.

In dem entriegelten Zustand sind, durch die Bewegung des Verstellelements 33 in die Öffnungsrichtung Y, gleichzeitig die an dem Verstellelement 33 angeordneten Magnete 331 a, 331 b relativ zu den Magneten 223a, 223b an den Sperrstücken 22a, 22b bewegt worden, so dass die magnetische Anziehungskraft zwischen diesen Magneten 223a, 223b, 331a, 331b abgeschwächt ist und das erste Verschlusselement 2 ohne großen Kraftaufwand von dem zweiten Verschlusselement 3 entnommen werden kann. Die Relativbewegung zwischen den Magneten 223a, 223b, 331a, 331b zum Entriegeln entspricht hierbei einer Scherbewegung, bei der die einander zugewandten Stirnflächen der Magnete 223a, 223b, 331a, 331b tangential zueinander bewegt werden, was mit vergleichweise geringem Kraftaufwand möglich ist.

Wie in Fig, 12B dargestellt, liegt in dem entriegelten Zustand das Verstellelement 33 an dem Anschlagabschnitt 321 des Gehäuseteils 32 an. Dieser Anschlagabschnitt 321 definiert damit eine Endstellung für den entriegelten Zustand, in dem der Eingriff zwischen den Federverriegelungselementen 34a, 34b und den Sperrstücken 22a, 22b aufgehoben ist.

Analog wie vorangehend für das Ausführungsbeispiel gemäß Fig. 1 bis 6 beschrieben, sind die Sperrstücke 22a, 22b auch bei dem Ausführungsbeispiel gemäß Fig. 7 bis 12 über magnetische Vorspannmittel in Richtung ihrer eingefahrenen Position gegenüber dem Gehäuse 21 vorgespannt. Die Magnete 223a, 223b an den Sperrstücken 22a, 22b stehen hierzu den Magneten 212a, 212b an dem Gehäuseabschnitt 210 anziehend gegenüber, so dass, wenn das erste Verschlussteil 2 von dem zweiten Verschlussteil 3 entnommen worden ist, die Sperrstücke 22a, 22b aufgrund dieser magnetischen Rückstellkraft in ihre eingefahrene Position gemäß Fig. 9B zurückgestellt werden.

Anstelle von magnetischen Vorspannmitteln in Form des Magneten 212 bei der Ausführungsform gemäß Fig. 1 bis 6 bzw. der Magnete 212a, 212b bei der Ausführungsform gemäß Fig. 7 bis 12 kann auch eine mechanische Feder 224 zum Einsatz kommen, die zwischen dem Sperrstück 22 bzw. den Sperrstücken 22a, 22b und dem Gehäuseabschnitt 210 wirkt, wie dies schematisch in Fig. 12B für das Sperrstück 22b dargestellt ist. Eine solche Feder 224 erzeugt, wenn sie durch das Ausfahren des zugeordneten Sperrstücks 22, 22a, 22b in die ausgefahrene Position gespannt worden ist, eine mechanische Rückstellkraft, die eine Rückstellung des Sperrstücks 22, 22a, 22b in die eingefahrene Position bewirkt, sobald die rückstellende Kraft die magnetische Anziehungskraft der zwischen dem Sperrstück 22 und dem zweitem Verschlussteil 3 bzw. den Sperrstücken 22a, 22b und dem zweiten Verschlussteil 3 wirkenden magnetischen Mittel übersteigt.

Mit der Verschlussvorrichtung wird eine mechanisch-magnetische Halterung geschaffen, mit der ein elektrisches Endgerät, beispielsweise ein Mobiltelefon oder ein Navigationsgerät, z.B. an einem Armaturenbrett eines Fahrzeugs lösbar befestigt werden kann und die gleichzeitig die Möglichkeit für eine elektromagnetische (induktive) Kopplung für eine Energieversorgung oder eine Datensignalübertragung des Endgeräts bereitstellt.

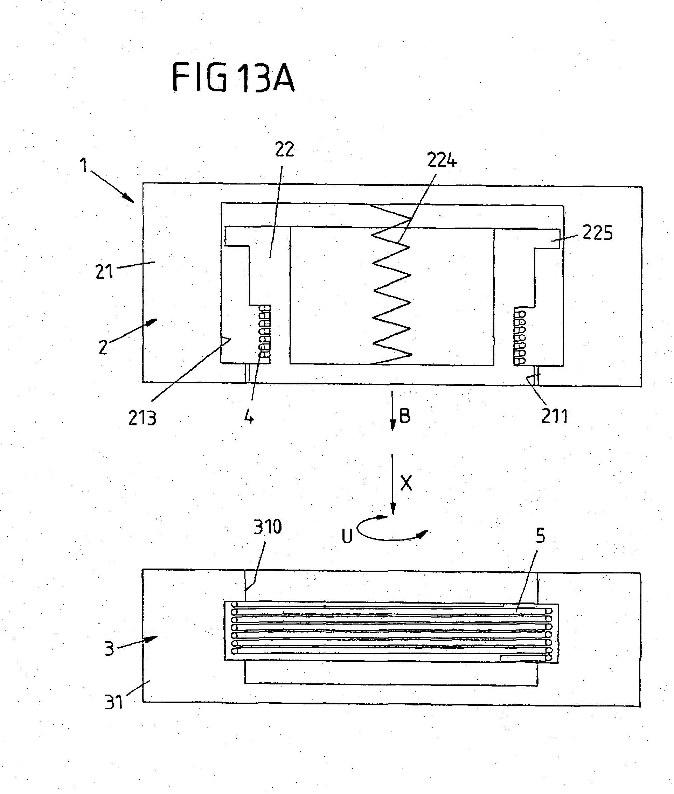

Fig. 13A bis 13C zeigen Prinzipskizzen eines Ausführungsbeispiels einer Verschlussvorrichtung 1 zur induktiven Kopplung zweier Bauteile. Die Vorrichtung 1 weist ein erstes Verschlussteil 2 und ein zweites Verschlussteil 3 auf, die jeweils mit einem elektrischen Gerät, beispielsweise einerseits einem elektrischen Energieversorgungssystem und andererseits einem zu versorgenden Endgerät, verbunden sein können. Über die Verschlussteile 2, 3 können die Bauteile induktiv zum Zweck einer elektrischen Energieübertragung oder auch für eine elektronische Datenübertragung miteinander gekoppelt werden.

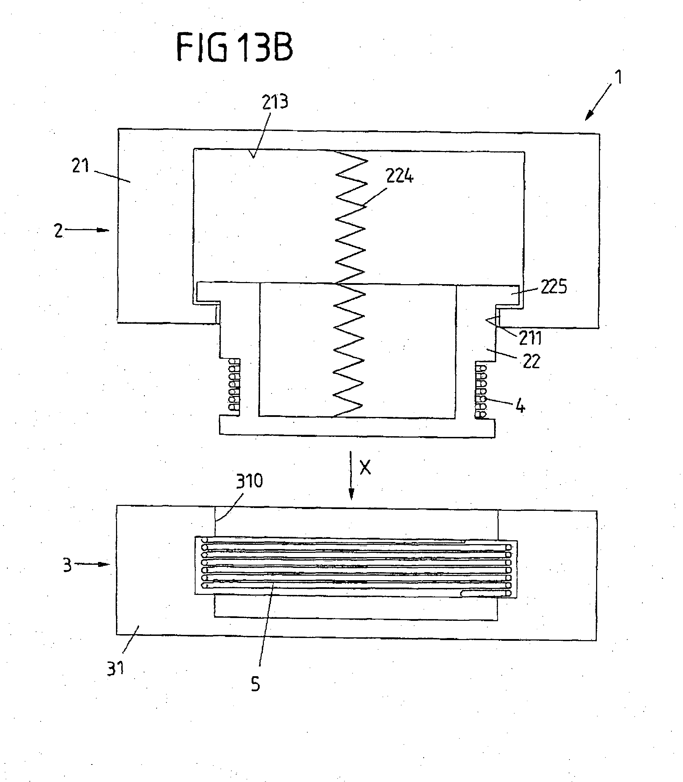

Fig. 13A zeigt die Vorrichtung 1 in einem geöffneten Zustand, in dem die Verschlussteile 2, 3 getrennt voneinander vorliegen. Das erste Verschlussteil 2 weist eine Gehäuse 21 und ein in einer Aufnahmekammer 213 des Gehäuses 21 angeordnetes Sperrstück 22 auf, das entlang einer Bewegungsrichtung B in der Aufnahmekammer 213 beweglich ist. Dieses Sperrstück 22 kann zwischen einer eingefahrenen Position, dargestellt in Fig. 13A, und einer ausgefahrenen Position, dargestellt in Fig. 13B, entlang der Bewegungsrichtung B verfahren werden und erstreckt sich in der ausgefahrenen Position durch eine Öffnung 211 an dem Gehäuse 21 hindurch, wobei durch einen die Öffnung 211 begrenzenden Randabschnitt, an dem das Sperrstück 22 in der ausgefahrenen Position mit einem Flansch 225 anliegt, ein Endanschlag für die ausgefahrene Position definiert ist. In der eingefahrenen Position gemäß Fig. 13A ist das Sperrstück 22 zumindest weitestgehend von dem Gehäuse 21 des ersten Verschlussteils 2 eingefasst und steht nach außen hin von dem Gehäuse 21 nicht oder zumindest nicht störend vor.

Das zweite Verschlussteil 3 weist ein Gehäuse 31 und eine darin angeordnete Aufnahmeöffnung 310 auf. In seiner ausgefahrenen Position, dargestellt in Fig. 13B, kann das Sperrstück 22 mit der Aufnahmeöffnung 310 in Eingriff gebracht werden, wobei hierzu das erste Verschlussteil 2 in eine Schließrichtung X an das zweite Verschlussteil 3 angesetzt und das Sperrstück 22 in die Aufnahmeöffnung 310 eingesteckt wird.

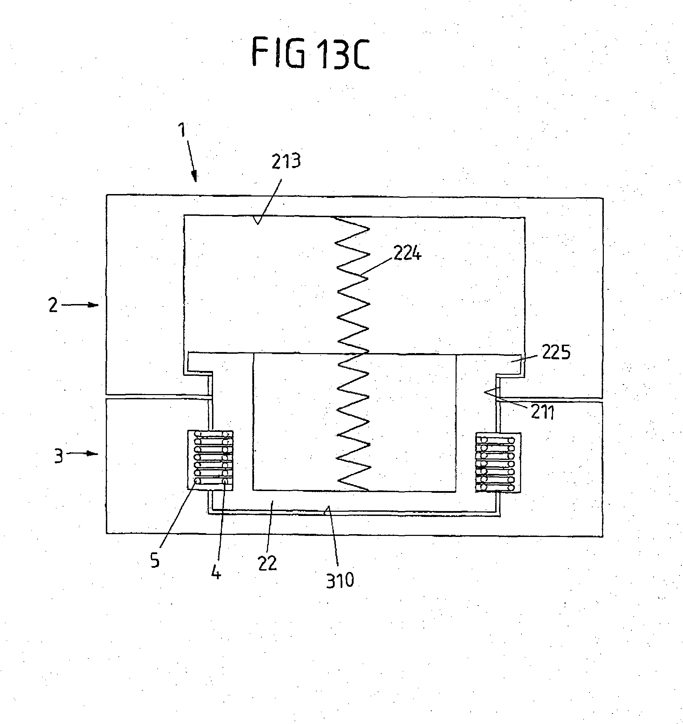

In einer Schließstellung, dargestellt in Fig. 13C, greift das Sperrstück 22 in die Aufnahmeöffnung 310 des zweiten Verschlussteils 1.

An dem Sperrstück 22 des ersten Verschlussteils 2 ist in dem dargestellten Ausführungsbeispiel eine elektrische Spule 4 angeordnet, die sich entlang einer Umfangsrichtung U um die Schließrichtung X an dem zumindest abschnittsweise zylindrischen Sperrstück 22 erstreckt und mehrere Windungen aufweist. An dem zweiten Verschlussteil 3 ist eine weitere Spule 5 angeordnet, die sich um die beispielsweise zylindrische Aufnahmeöffnung 310 des Gehäuses 31 entlang der Umfangsrichtung U um die Schließrichtung X erstreckt. Diese zweite Spule 5 weist einen größeren Durchmesser als die erste Spule 4 an dem Sperrstück 22 auf.

Die erste Spule 4 kann in einer in die Mantelfläche des zumindest abschnittsweise zylindrisch ausgebildeten Sperrstücks 22 angeordnet sein, während die Spule 5 in einer Vertiefung der Mantelfläche der korrespondierend zumindest abschnittsweise zylindrisch ausgebildeten Aufnahmeöffnung 310 des Gehäuses 31 einliegen kann. Denkbar ist auch, die Spulen 4, 5 in das Sperrstück 22 und das Gehäuse 31 einzuspritzen, wobei das Sperrstück 22 und das Gehäuse 31 hierzu zumindest teilweise aus Kunststoff ausgebildet sein können.

In der Schließstellung greift das Sperrstück 22 derart in die Aufnahmeöffnung 310 ein, dass die Spule 4 des Sperrstücks 22 umfänglich von der Spule 5 an dem Gehäuse 31 des zweiten Verschlussteils 3 umgeben ist (siehe Fig. 13C). Die Spulen 4, 5 befinden sich axial in Richtung der Schließrichtung X gesehen somit im Wesentlichen auf der gleichen Höhe, so dass die Spule 4 an dem Sperrstück 22 von der Spule 5 an dem Gehäuse 31 überdeckt ist und die Spule 4 in die Spule 5 eingreift. Auf diese Weise wird eine vorteilhafte induktive Kopplung zwischen den Spulen 4, 5 bereitgestellt, so dass ein an einer der Spulen 4, 5 anliegender Strom mit hohem Wirkungsgrad eine Spannung an der anderen der Spulen 4, 5 induziert.

Das Sperrstück 22 kann zum Überführen von seiner eingefahrenen Position (Fig. 13A) in seine ausgefahrene Position (Fig. 13B) beispielsweise mechanisch durch einen geeigneten Hebel oder Knopfes betätigt werden. Denkbar ist hierbei beispielsweise, dass an der Aufnahmekammer 213 eine Kulissenführung vorgesehen ist, wie diese beispielsweise von Kugelschreibern bekannt ist, so dass durch Betätigen eines geeigneten Betätigungsknopfes das Sperrstück 22 in seine ausgefahrene Position überführt werden kann und in der ausgefahrenen Position dann mechanisch verrastet ist, wobei durch erneutes Betätigen des Betätigungsknopfes das Sperrstück 22 gelöst und zurück in die eingefahrene Position gebracht werden kann.

Zum Zurückführen des Sperrstücks 22 ist eine Feder 224 zwischen dem Sperrstück 22 und dem Gehäuse 21 des ersten Verschlussteils 2 vorgesehen, die ein Vorspannmittel verwirklicht, welches das Sperrstück 22 in Richtung seiner eingefahrenen Position gegenüber dem Gehäuse 21 vorspannt (beim Überführen in die ausgefahrene Stellung wird die Feder 224 gespannt und übt somit eine rückstellende Kraft auf das Sperrstück 22 aus).

Obwohl nicht im Einzelnen dargestellt, kann das zweite Verschlussteil 3 ein Federverriegelungselement zum rastenden Halten des Sperrstücks 22 in der Schließstellung aufweisen. Zwingend erforderlich ist das Federverriegelungselement aber nicht.

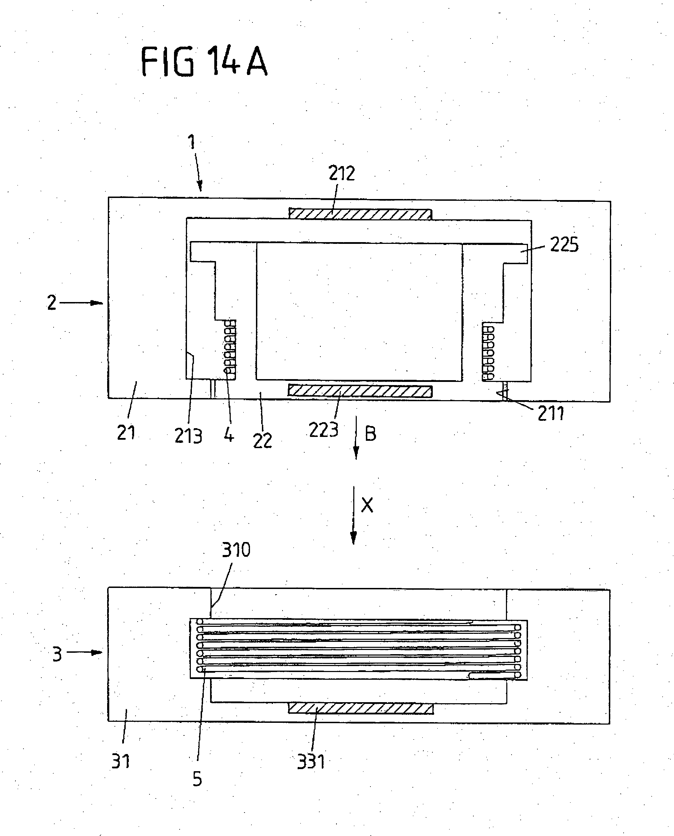

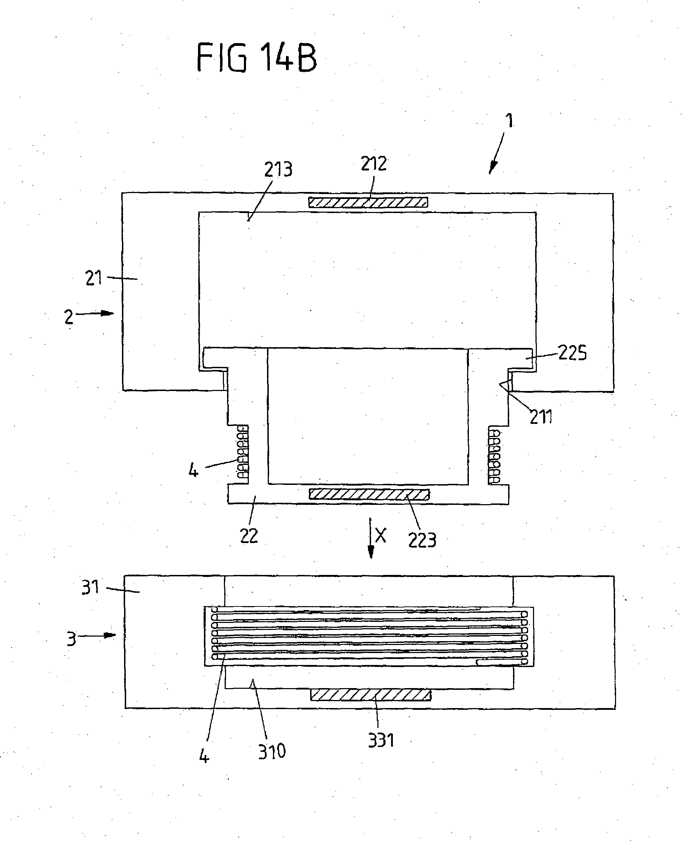

Bei einem in Fig. 14A bis 14C dargestellten Ausführungsbeispiel sind anstelle der Feder 224 an dem Gehäuse 21, dem Sperrstück 22 und dem Gehäuse 31 jeweils ein Magnet 212, 223, 331 vorgesehen. Diese Magnete 212, 223, 331 verwirklichen zum einen Vorspannmittel zum Vorspannen des Sperrstücks 22 gegenüber dem Gehäuse 21 und zum anderen magnetische Mittel, aufgrund derer das Sperrstück 22 beim Ansetzen des ersten Verschlussteils 2 an das zweite Verschlussteil 3 in die Bewegungsrichtung B in seine ausgefahrene Position (Fig. 14B) überführt und zudem der Ansetzvorgang magnetisch unterstützt wird.

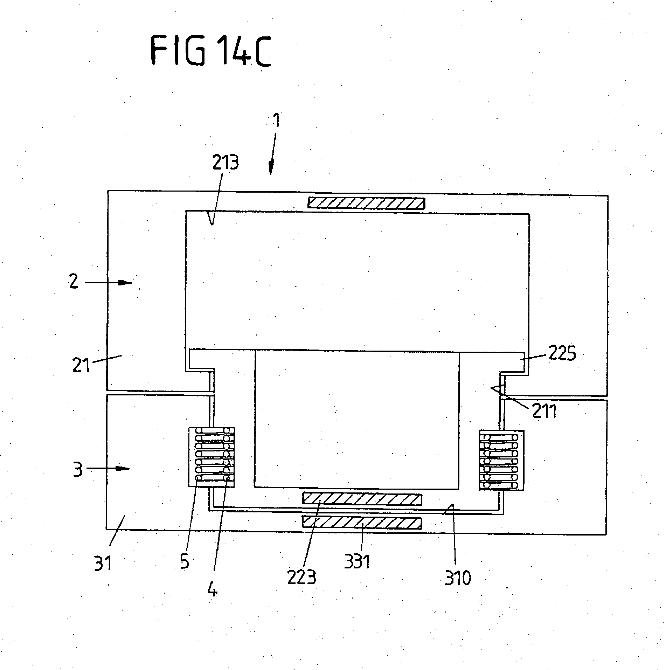

Der Magnet 223 an dem Sperrstück 22 und der Magnet 331 an dem Gehäuse 31 stehen sich hierzu mit ungleichnamigen Polen gegenüber und ziehen sich magnetisch an, so dass beim Ansetzen des ersten Verschlussteils 2 an das zweite Verschlussteil 3 das Eingangselement 22 aufgrund der magnetischen Anziehungskraft der Magnete 223, 331 in seine ausgefahrene Position gezogen wird, so dass das Sperrstück 22 mit der Aufnahmeöffnung 310 in Eingriff gebracht werden kann (siehe Fig. 14B und 14C). Aufgrund der anziehenden Kraft zwischen den Magneten 223, 331 wird zudem das erste Verschlussteil 2 beim Ansetzen hin zu dem zweiten Verschlussteil 3 gezogen, so dass der Ansetzvorgang in leichter, für einen Nutzer haptisch angenehmer Weise erfolgen kann.

Der Magnet 212 an dem Gehäuse 21 steht dem Magneten 223 an dem Sperrstück 22 ebenfalls mit ungleichnamigem Pol und damit anziehend gegenüber. Der Magnet 212 ist dabei jedoch so dimensioniert, dass die magnetische Anziehungskraft zwischen den Magneten 223, 331 an dem Sperrstück 22 und an dem Gehäuse 31 des zweiten Verschlusselements 3 bei hinreichender Annährung des ersten Verschlussteils 2 an das zweite Verschlussteil 3 die magnetische Anziehungskraft der Magnete 212, 223 übersteigt, so dass das Sperrstück 22 in seine ausgefahrene Position überführt wird. Wird jedoch das erste Verschlussteil 2 wieder von dem zweiten Verschlussteil 3 gelöst und hinreichend weit von dem zweiten Verschlussteil 3 entfernt, so bewirkt die magnetische Anziehungskraft zwischen den Magneten 212, 223 an dem Gehäuse 21 einerseits und dem Sperrstück 22 andererseits eine rückstellende Kraft auf das Sperrstück 22, aufgrund derer das Sperrstück 22 in seine eingefahrene Position in die Aufnahmekammer 213 hineingezogen wird (siehe Fig. 14A).

Ansonsten ist die Vorrichtung 1 gemäß Fig. 14A bis 14C funktionsgleich wie die Vorrichtung gemäß Fig. 13A bis 13C, insbesondere mit Blick auf die induktive Kopplung der Spulen 4, 5, so dass diesbezüglich auf das vorangehend zu Fig. 13A bis 13C Ausgeführte verwiesen wird.

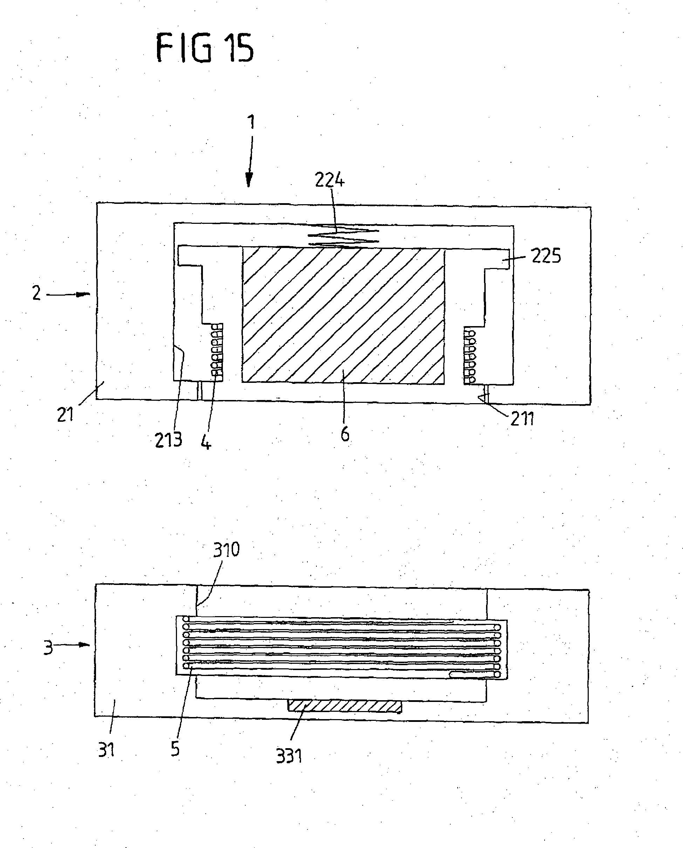

Fig. 15 zeigt ein Ausführungsbeispiel, bei dem an dem Sperrstück 22 ein magnetischer Anker 6 in Form eines ferromagnetischen Eisenkerns angeordnet ist. Dieser magnetische Anker 6 verbessert zum einen die induktive Kopplung zwischen den Spulen 4, 5 und steht zum zweiten einem Magneten 331 an dem Gehäuse 31 des zweiten Verschlussteils 3 anziehend gegenüber, so dass aufgrund der magnetischen Wechselwirkung zwischen dem Magneten 331 und dem magnetischen Anker 6 eine magnetische Anziehungskraft zum Ausfahren des Sperrstücks 22 aus seiner eingefahrenen Position in die ausgefahrene Position (analog Fig. 13B und Fig. 14B) und zum magnetischen Unterstützen des Ansetzvorgangs des ersten Verschlussteils 2 an das zweite Verschlussteil 3 bewirkt wird.

Bei dem Ausführungsbeispiel gemäß Fig. 15 ist eine Feder 224 zum Vorspannen des Sperrstücks 22 gegenüber dem Gehäuse 21 in Richtung der eingefahrenen Position vorgesehen. Denkbar ist aber auch hier, einen Magneten an dem Gehäuse 21 vorzusehen, der eine magnetische, vorspannende Anziehungskraft auf den magnetischen Anker 6 ausübt (analog dem Ausführungsbeispiel gemäß Fig. 14A bis 14C).

Ansonsten ist dieses Ausführungsbeispiel funktionsgleich wie die vorangehend anhand von Fig. 13A bis 13C und Fig. 14A bis 14C beschriebenen Ausführungsbeispiele.

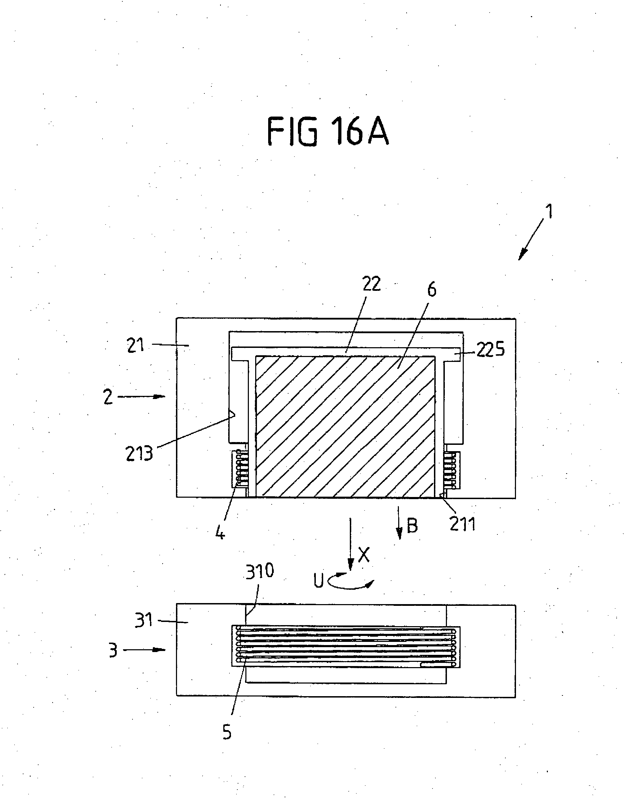

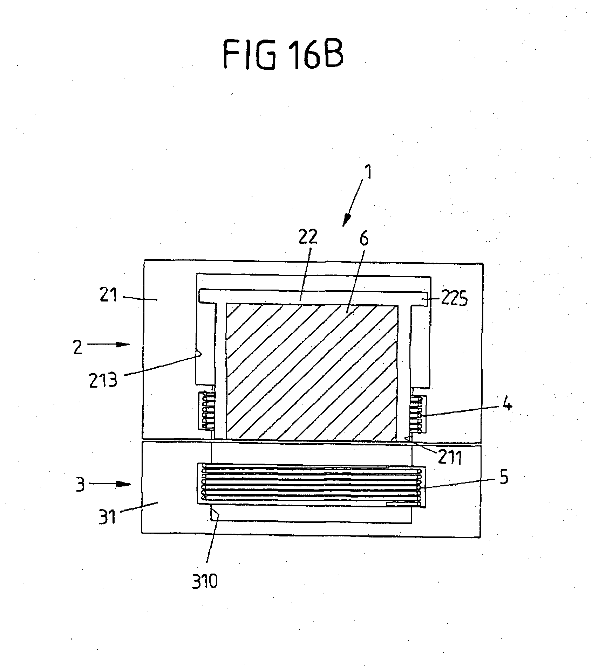

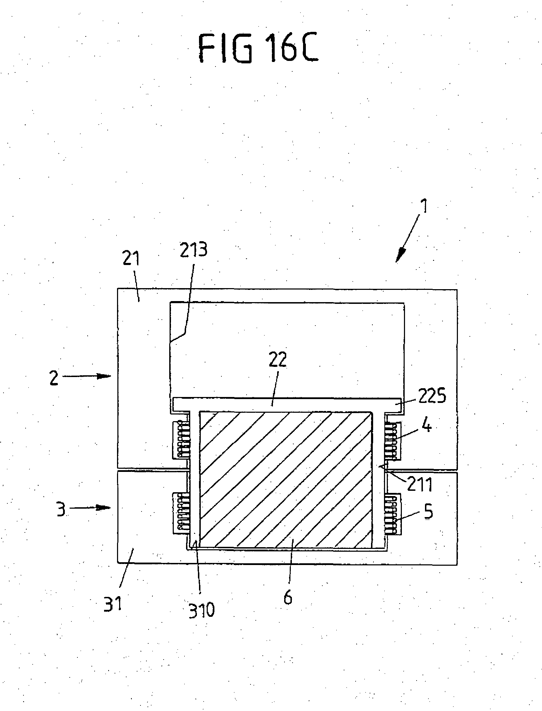

Fig. 16A bis 16C zeigen ein Ausführungsbeispiel einer Kopplungsvorrichtung, bei dem, im Unterschied zu den vorangehend beschriebenen Ausführungsbeispielen, die Spule 4 feststehend an dem Gehäuse 21 des ersten Verschlussteils 2 angeordnet ist und die Öffnung 211 an dem Gehäuse 21 umfänglich umschließt. Das Sperrstück 22 weist hierbei einen magnetischen Anker 6 auf (oder ist vollständig durch einen magnetischen Anker 6 aus einem ferromagnetischen Material ausgebildet), der in einer ausgefahrenen Position, dargestellt in Fig. 16C, in die Aufnahmeöffnung 310 des Gehäuses 31 des zweiten Verschlussfeils 3 eingreift und auf diese Weise die Spule 4 des ersten Verschlussteils 2 und die Spule 5 des zweiten Verschlussteils 3 für eine wirkungsvolle induktive Kopplung der beiden Spulen 4, 5 miteinander durchgreift.

Bei dem Ausführungsbeispiel gemäß Fig. 16A bis 16C kann, analog wie vorangehend beschrieben, ein Magnet an dem Gehäuse 31 des zweiten Verschlussteils 3 angeordnet sein, um ein automatisches Ausfahrens des Sperrstücks 2 in die ausgefahrene Position beim Ansetzen des ersten Verschlussteils 2 in die Schließrichtung X an das zweite Verschlussteil 3 zu bewirken. Ein weiterer Magnet kann zum Bereitstellen einer Vorspannung des Sperrstücks 22 gegenüber dem Gehäuse 21 des ersten Verschlussteils 2 an dem Gehäuse 21 vorgesehen sein, wobei alternativ auch eine mechanische Feder zwischen dem Gehäuse 21 und dem Sperrstück 22 vorgesehen sein kann.

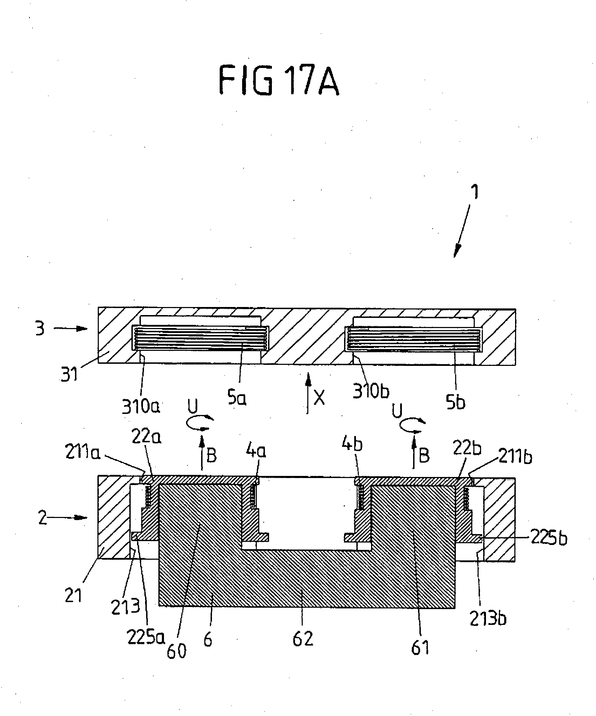

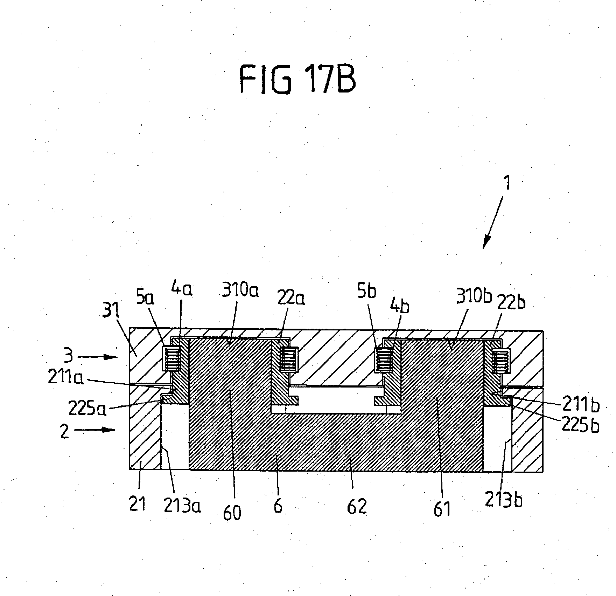

Bei einem in Fig. 17A und Fig. 17B dargestellten Ausführungsbeispiel einer Vorrichtung 1 sind an dem ersten Verschlussteil 2 zwei Sperrstücke 22a, 22b vorgesehen, die jeweils in einer Aufnahmekammer 213a, 213b entlang einer Bewegungsrichtung B verschiebbar angeordnet sind. An jedem dieser Sperrstücke 22a, 22b ist eine elektrische Spule 4a, 4b angeordnet, die zusammen mit dem jeweiligen Sperrstück 22a, 22b aus einer eingefahrenen Position (Fig. 17A) in eine ausgefahrene Position (Fig. 17B) überführt werden kann, um mit einer Aufnahmeöffnung 310a, 310b an dem Gehäuse 31 des zweiten Verschlussteils 3 in Eingriff gebracht zu werden und in einer Schließstellung, in der die Sperrstücke 22a, 22b in die Aufnahmeöffnungen 310a, 310b eingreifen, jeweils für eine wirkungsvolle induktive Kopplung in eine Spule 5a, 5b an der jeweils zugeordneten Aufnahmeöffnung 310a, 310b einzugreifen.

Die Spulen 4a, 4b erstrecken sich jeweils in eine Umfangsrichtung U um die zumindest abschnittsweise zylindrisch ausgebildeten Sperrstücke 22a, 22b. Zudem ist an jeder der Aufnahmeöffnungen 310a, 310b eine elektrische Spule 5a, 5b angeordnet, die sich ebenfalls entlang einer Umfangsrichtung U um die zugeordnete Aufnahmeöffnung 310a, 310b erstreckt.

Zur weiteren Verbesserung der induktiven Kopplung ist an den Sperrstücken 22a, 22b ein magnetischer Anker 6 vorgesehen, der die Sperrstücke 22a, 22b magnetisch miteinander verbindet. Mit einem Ankerabschnitt 60, 61 liegt dieser magnetische Anker 6 dabei jeweils in einem Sperrstück 22a, 22b ein, wobei die Ankerabschnitte 60, 61 durch einen transvers zu den Ankerabschnitten 60, 61 gerichteten, in dem Gehäuse 21 entlang der Bewegungsrichtung B zusammen mit den Sperrstücken 22a, 22b bewegbaren Ankerabschnitt 62 miteinander verbunden sind.

Der magnetische Anker 6 kann beispielsweise aus einem ferromagnetischen Material, beispielsweise aus Eisen, hergestellt sein.

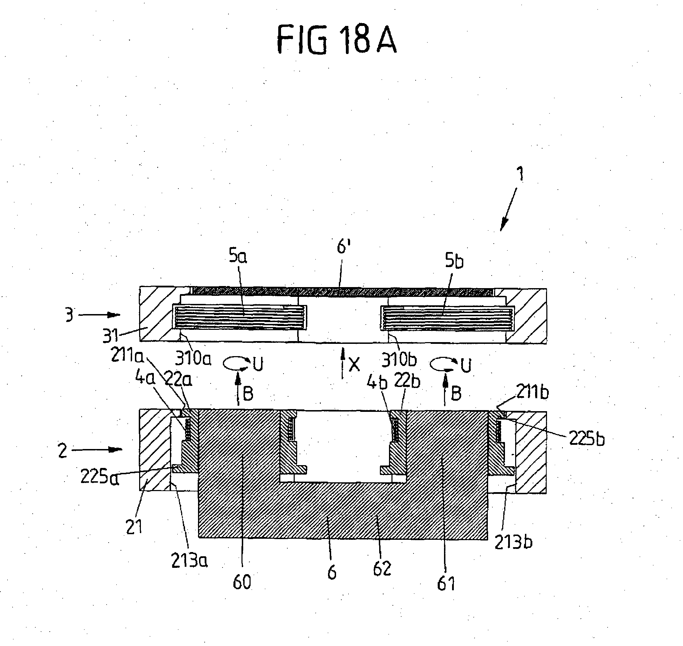

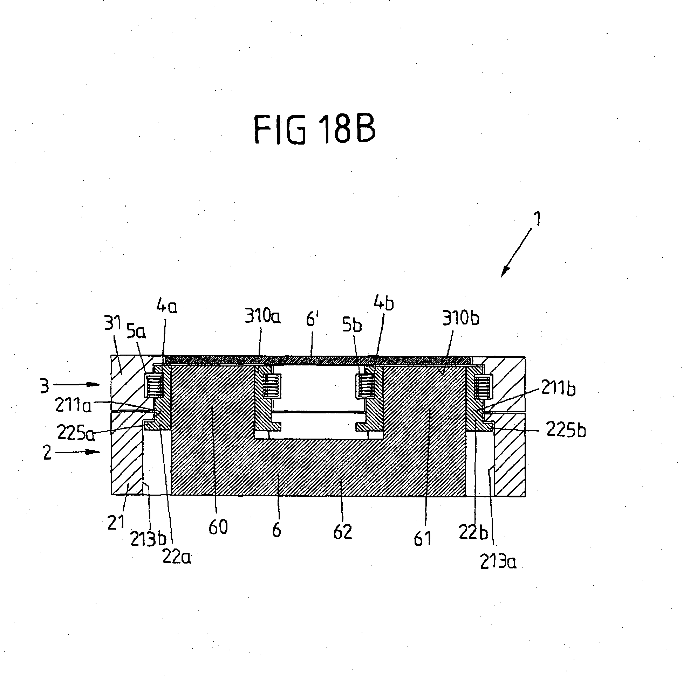

Bei einem gegenüber dem Ausführungsbeispiel gemäß Fig. 17A und 17B modifizierten Ausführungsbeispiel gemäß Fig. 18A und 18B ist an dem zweiten Verschlussteil 3 zusätzlich ein magnetischer Rückschluss 6' beispielsweise in Form einer ferromagnetischen Platte vorgesehen, der die Aufnahmeöffnungen 310a, 310b rückseitig verschließt. Über den magnetischen Rückschluss 6' wird in der Schließstellung (dargestellt in Fig. 18B) zusammen mit dem magnetischen Anker 6 ein weitestgehend geschlossener magnetischer Kreis geschaffen, der durch den magnetischen Rückschluss 6' und den magnetischen Anker 6 gebildet ist und, nach Art eines Ringkerntransformators, eine induktive Kopplung der Spulen 4a, 4b, 5a, 5b mit hohem Wirkungsgrad bereitstellt.

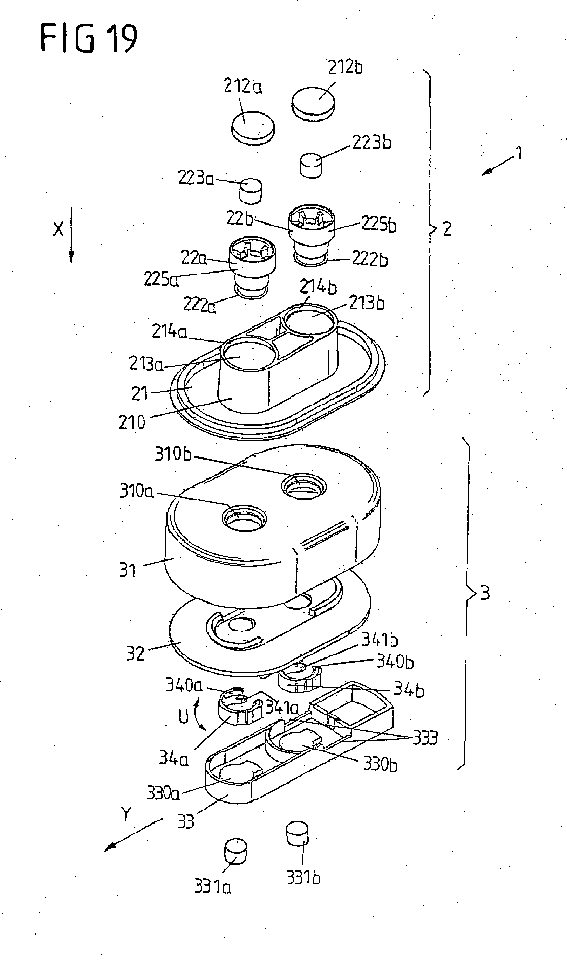

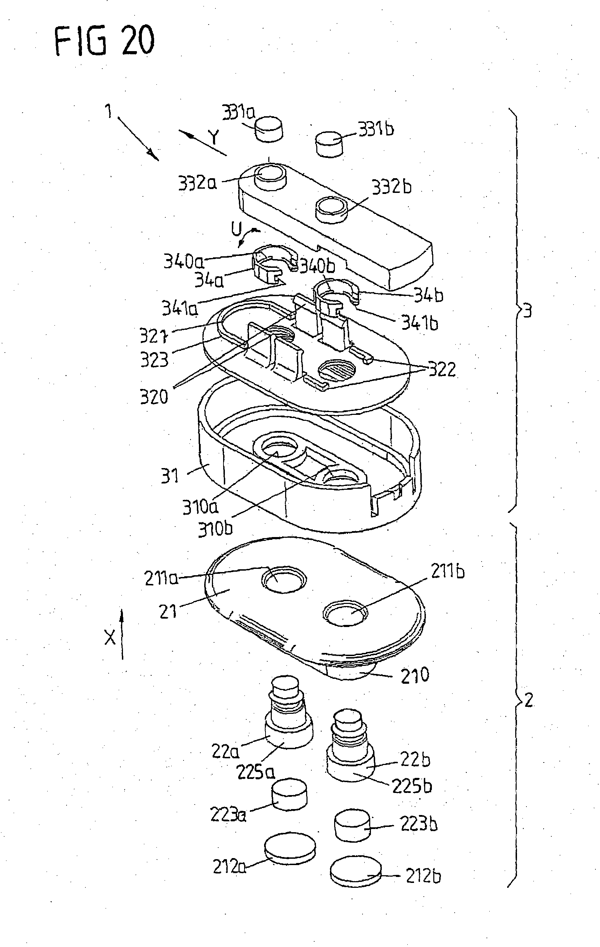

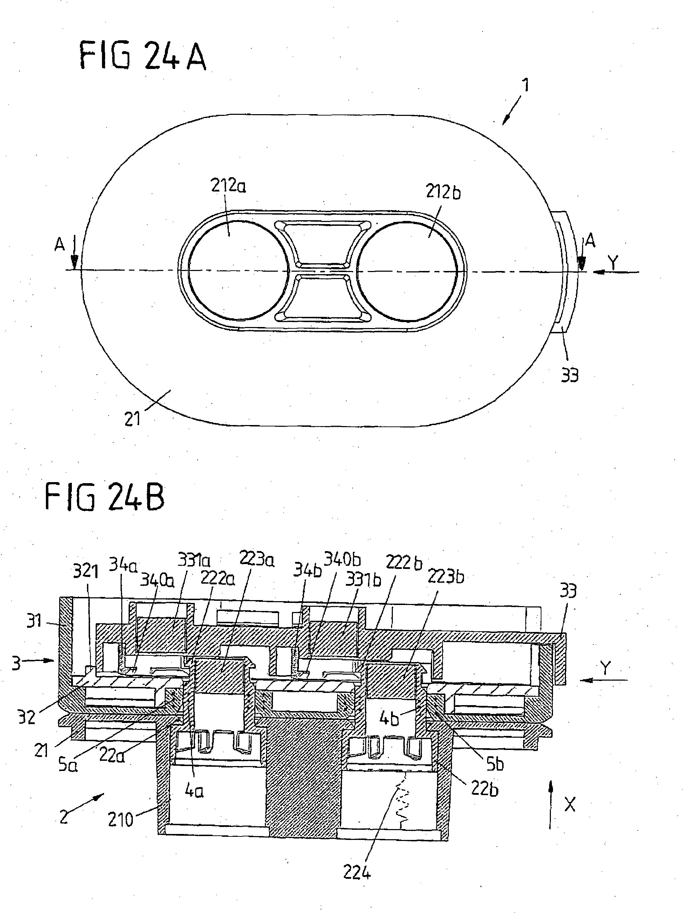

Fig. 19 bis 24 zeigen ein weiteres Ausführungsbeispiel einer Verschlussvorrichtung 1, die ein erstes Verschlussteil 2 und ein zweites Verschlussteil 3 aufweist, die in einer geöffneten Stellung getrennt voneinander vorliegen, zum Schließen in eine Schließrichtung X aneinander angesetzt werden können und in einer Schließstellung miteinander verriegelt sind.

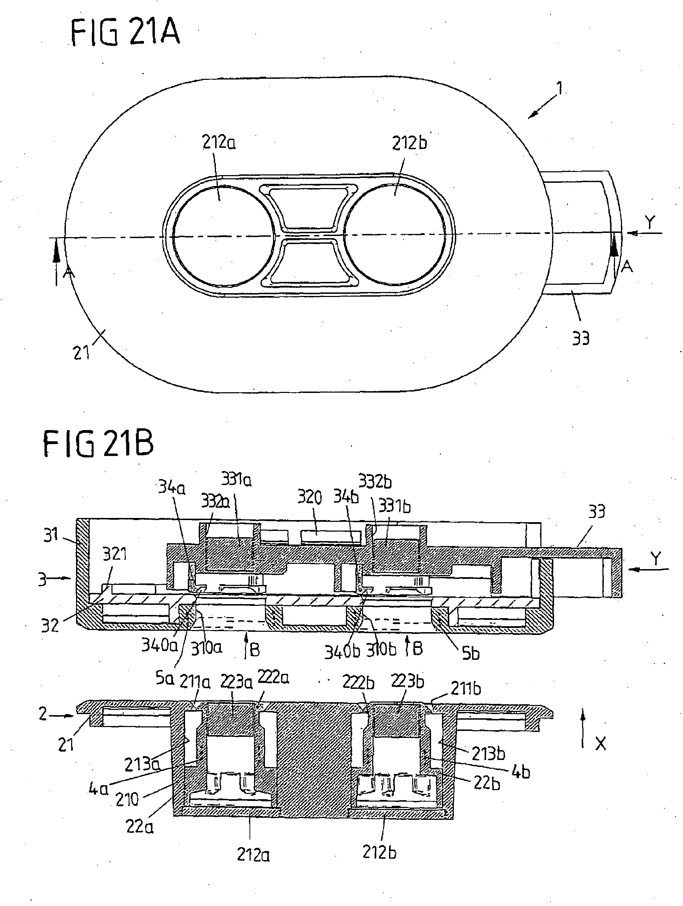

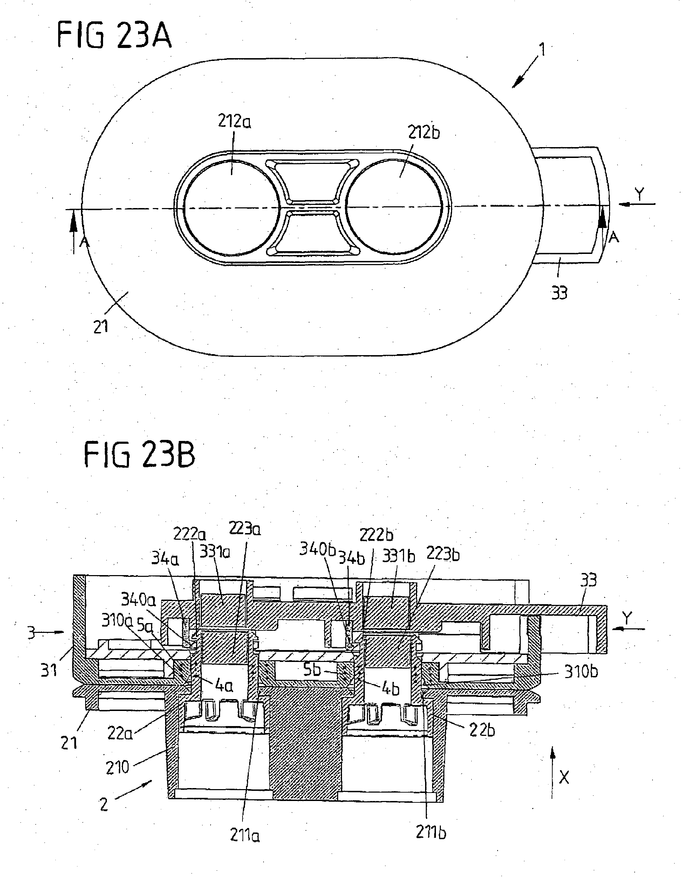

In Aufnahmekammern 213a, 213b an einem Gehäuse 21 des ersten Verschlussteils 2 sind zwei Sperrstücke 22a, 22b beweglich angeordnet, und an einem Gehäuse 31 des zweiten Verschlussteils 3 sind zwei Federverriegelungselemente 34a, 34b vorgesehen. Über die Sperrstücke 22a, 22b kann bei diesem Ausführungsbeispiel einerseits über an den Sperrstücken 22a, 22b und dem zweiten Verschlussteil 3 angeordnete elektrische Spulen 4a, 4b, 5a, 5b (siehe Fig. 21 B) eine wirkungsvolle induktive Kopplung zweier mit den Verschlussteilen 2, 3 verbundener elektrischer Geräte bereitgestellt werden. Andererseits schaffen die Sperrstücke 22a, 22b durch einen Eingriff in die Federverriegelungselemente 34a, 34b in einer Schließstellung (Fig. 23B) eine mechanische Verrastung der Verschlussteile 2, 3 für einen sicheren, belastbaren Halt der Verschlussteile 2, 3 aneinander.

Die Sperrstücke 22a, 22b greifen in der Schließstellung in Aufnahmeöffnungen 310a, 310b des zweiten Verschlussteils 3 ein und sind mit den Federverriegelungselementen 34a, 34b verrastet, so dass das erste Verschlussteil 2 in der Schließstellung mechanisch mit dem zweiten Verschlussteil 3 verriegelt ist. Jedes Sperrstück 22a, 22b weist hierzu einen Rastabschnitt 222a, 222b auf, der in der Schließstellung formschlüssig an einem Rastabschnitt 340a, 340b des zugeordneten Federverriegelungselements 34a, 34b anliegt (siehe Fig. 23B).

An den Sperrstücken 22a, 22b des ersten Verschlussteils 2 ist jeweils eine aus mehreren Windungen bestehende elektrische Spule 4a, 4b angeordnet, die sich umfänglich um das Sperrstück 22a, 22b erstreckt und zusammen mit dem Sperrstück 22a, 22b beweglich ist. Diese Spulen 4a, 4b sind jeweils einer Spule 5a, 5b im Bereich der Aufnahmeöffnung 310a, 310b an dem Gehäuse 31 des zweiten Verschlussteils 3 zugeordnet. Die Spulen 4a, 4b, 5a, 5b können einerseits beispielsweise mit einem elektrischen Versorgungssystem oder einer Datenquelle oder andererseits mit einem elektrisch zu versorgendem oder Daten empfangendem Endgerät wie einem Mobiltelefon oder einem Navigationsgerät verbunden sein. In der Schließstellung, dargestellt in Fig. 23B, stehen sich diese Spulen 4a, 4b, 5a, 5b so gegenüber, dass sie elektromagnetisch miteinander gekoppelt sind und ein Stromfluss in der einen der Spulen 4a, 4b, 5a, 5b eine Spannung in der anderen der Spulen 4a, 4b, 5a, 5b induziert.

Jedes Sperrstück 22a, 22b trägt einen Magneten 223a, 223b. Zudem ist an Aufnahmeöffnungen 214a, 214b des Gehäuseabschnitts 210 jeweils ein Magnet 212a, 212b angeordnet, der die Aufnahmekammer 213a, 213b rückseitig (d.h. zu einer von dem anderen, zweiten Verschlussteil 3 in der Schließstellung abgewandten Seiten hin) verschließt (vergleiche Fig. 19).

An dem Gehäuse 31 des zweiten Verschlussteils 3 ist ein Gehäuseteil 32 fest angeordnet, an dem ein Verstellelement 33 entlang einer Öffnungsrichtung Y verschiebbar angeordnet ist, das einerseits zwei Federverriegelungselemente 34a, 34b an Halteabschnitten 330a, 330b in drehfester Weise trägt und andererseits über Aufnahmeöffnungen 232a, 232b mit Magneten 331a, 331b verbunden ist.

Mit Ausnahme der Anordnung der Spulen 4a, 4b, 5a, 5b ist das Ausführungsbeispiel gemäß Fig. 19 bis 24 in Aufbau und Funktion identisch dem gemäß Fig. 7 bis 12. Es soll daher vollumfänglich auf die obigen Erläuterungen zu dem Ausführungsbeispiel gemäß Fig. 7 bis 12 verwiesen werden, die in analoger Weise auch auf das Ausführungsbeispiel gemäß Fig. 19 bis 24 zutreffen.

Bei dem Ausführungsbeispiel gemäß Fig. 19 bis 24 werden über die zwei parallel zueinander angeordneten Sperrstücke 22a, 22b zwei induktive koppelnde Kanäle bereitgestellt. Diese können beide z.B. für eine elektrische Energieübertragung verwendet werden, um ein mit dem einen Verschlussteil 2, 3 verbundenes elektrisches Endgerät über ein mit dem anderen Verschlussteil 2, 3 verbundenes Versorgungssystem zu versorgen. Denkbar ist aber auch, lediglich einen der Kanäle für eine (niederfrequente) Energieübertragung, den anderen Kanal hingegen für eine (hochfrequente) Datensignalübertragung für eine elektronische Kommunikation zweier Geräte miteinander zu verwenden.

An beiden der Sperrstücke 22a, 22b kann ein magnetischer Anker zur Verbesserung des Wirkungsgrads der induktiven Kopplung angeordnet sein. Denkbar ist aber auch, nur an einem der Sperrstücke 22a, 22b einen magnetischen Anker vorzusehen.

Die Sperrstücke 22a, 22b können auch, zur Bereitstellung eines magnetischen Ankers, ganz oder zumindest teilweise aus einem ferromagnetischen Material gefertigt sein. Der magnetische Anker trägt in diesem Fall gleichzeitig auch die Rastabschnitte 222a, 222b und dient somit auch der mechanischen Verrastung.

Mit der Verschlussvorrichtung wird eine mechanisch-magnetische Halterung geschaffen, mit der ein elektrisches Endgerät, beispielsweise ein Mobiltelefon oder ein Navigationsgerät, z.B. an einem Armaturenbrett eines Fahrzeugs lösbar befestigt werden kann und die gleichzeitig die Möglichkeit für eine elektromagnetische (induktive) Kopplung für eine Energieversorgung oder eine Datensignalübertragung des Endgeräts bereitstellt.

Eine Verschlussvorrichtung dieser Art kann eingesetzt werden für eine Kopplung
- von Energieverbrauchern wie z.B. elektronischen Kleingeräten (z.B. Mobiltelefon, Fernseher, MP3-Spieler, Computer) oder elektrischen Geräten (z.B. Lampen, Ventilatoren, Wärmeerzeugern, Kühlgeräten)
- mit Energieerzeugern wie z.B. Akkumulatoren oder Netzstromquellen, die wiederum in verschiedensten Gegenständen integriert sein können, wie z.B. Kraftfahrzeuge, Fahrräder, Rollstühle, Möbel, Wände (insbesondere im Badbereich), Schiffe, Flugzeuge, Tische in Flugzeugen, Sportgeräten, Helme oder dergleichen.

### Bezugszeichenliste

- 1: Verschlussvorrichtung
- 2: Verschlussteil
- 21: Gehäuse
- 210: Gehäuseabschnitt
- 211, 211a, 211b: Öffnung
- 212, 212a, 212b: Magnet
- 213, 213a, 213b: Aufnahmekammer
- 214, 214a, 214b: Aufnahmeöffnung
- 215: Gehäuseabschnitt
- 22, 22a, 22b: Sperrstück
- 222, 222a, 222b: Rastabschnitt
- 223, 223a, 223b: Magnet
- 224: Feder
- 225a, 225b: Flansch
- 3: Verschlussteil
- 31: Gehäuse
- 310, 310a, 310b: Aufnahmeöffnung
- 311: Gehäuseabschnitt
- 32: Gehäuseteil
- 320: Formschlusselemente
- 321: Anschlagabschnitt
- 322: Anschläge
- 323: Längsführungsabschnitt
- 33: Verstellelement
- 330, 330a, 330b: Halteabschnitt
- 331, 331a, 331b: Magnet
- 332, 332a, 332b: Aufnahmeöffnung
- 333: Aussparungen
- 34, 34a, 34b: Federverriegelungselement
- 340, 340a, 340b: Rastabschnitt
- 341, 341 a, 341 b: Öffnung
- 35: Aufnahmeöffnung
- 4, 5: Elektrische Spule
- 6: Magnetischer Anker
- 6': Magnetischer Rückschluss
- B: Bewegungsrichtung
- U: Umfangsrichtung
- X: Schließrichtung
- Y: Öffnungsrichtung

## Patentansprüche

1. Verschlussvorrichtung, mit
- einem ersten Verschlussteil (2), das ein Sperrstück (22, 22a, 22b) aufweist,
- einem zweiten Verschlussteil (3) das ein Federverriegelungselement (34, 34a, 34b) aufweist, und
- magnetischen Mitteln (223, 223a, 223b, 331, 331a, 331b), die zwischen dem ersten Verschlussteil (2) und dem zweiten Verschlussteil (3) wirken und eine magnetische Anziehungskraft zwischen dem ersten Verschlussteil (2) und dem zweiten Verschlussteil (3) bewirken,
wobei
- zum Schließen der Verschlussvorrichtung das erste Verschlussteil (2) in eine Schließrichtung an das zweite Verschlussteil (3) ansetzbar ist,
- in einer Schließstellung das Sperrstück (22, 22a, 22b) und das Federverriegelungselement (34, 34a, 34b) miteinander in Eingriff stehen, so dass das erste Verschlussteil (2) entgegen der Schließrichtung gegenüber dem zweiten Verschlussteil (3) verriegelt ist, und
- zum Lösen der Verschlussvorrichtung das Federverriegelungselement (34, 34a, 34b) und das Sperrstück (22, 22a, 22b) relativ zueinander verschiebbar oder verdrehbar sind, um das Federverriegelungselement (34, 34a, 34b) und das Sperrstück (22, 22a, 22b) außer Eingriff zu bringen,
an dem ersten Verschlussteil (2) und an dem zweiten Verschlussteil (3) jeweils eine elektrische Spule (4, 5) zur elektromagnetischen Kopplung in der Schließstellung angeordnet ist, **dadurch gekennzeichnet, dass** das Federverriegelungselement (34, 34a, 34b) ein zumindest obschnittsweise federelastisch ausgebildetes Federverriegelungselement ist.

2. Verschlussvorrichtung nach Anspruch 1, **dadurch gekennzeichnet,** dass in der Schließstellung ein erster Gehäuseabschnitt (215) des ersten Verschlussteils (2) und ein zweiter Gehäuseabschnitt (311) des zweiten Verschlussteils (3) sich parallel zueinander erstrecken und aneinander anliegen, wobei sich die Spulen (4, 5) in der Schließstellung insbesondere in parallelen, quer zur Schließrichtung (X) verlaufenden Ebenen an den Gehäuseabschnitten (215, 311) erstrecken.

3. Verschlussvorrichtung nach Anspruch 1 oder 2, **dadurch gekennzeichnet,** dass die magnetischen Mittel (223, 223a, 223b, 331, 331a, 331 b) zwischen dem Sperrstück (22, 22a, 22b) des ersten Verschlussteils (2) und dem zweiten Verschlussteil (3) wirken und eine magnetische Anziehungskraft zwischen dem Sperrstück (22, 22a, 22b) des ersten Verschlussteils (2) und dem zweiten Verschlussteil (3) bewirken.

4. Verschlussvorrichtung nach einem der vorangehenden Ansprüche, **dadurch gekennzeichnet,** dass das Sperrstück (22, 22a, 22b) beweglich an einem Gehäuse (21) des ersten Verschlussteils (2) angeordnet ist derart, dass es in einer eingefahrenen Position zumindest teilweise in einer Aufnahmekammer (213, 213a, 213b) des Gehäuses (21) eingefasst ist und in einer ausgefahrenen Position derart von dem Gehäuse (21) vorsteht, dass es in Eingriff mit dem Federverriegelungselement (34, 34a, 34b) bringbar ist, wobei insbesondere
- eine erste Spule (4,4a, 4b) an dem Sperrstück (22, 22a, 22b) angeordnet und zusammen mit dem Sperrstück (22, 22a, 22b) in die ausgefahrene Position überführbar ist oder
- eine erste Spule (4, 4a, 4b) an dem Gehäuse (21) des ersten Verschlussteils (2) angeordnet ist und das Sperrstück (22, 22a, 22b) einen magnetischen Anker (6) trägt, der zusammen mit dem Sperrstück (22, 22a, 22b) in die ausgefahrene Position überführbar ist.

5. Verschlussvorrichtung nach Anspruch 4, **dadurch gekennzeichnet,** dass in der eingefahrenen Position das Sperrstück (22, 22a, 22b) nicht nach außen hin von dem Gehäuse (21) vorsteht.

6. Vorrichtung nach Anspruch 4 oder 5, **dadurch gekennzeichnet,** dass das Sperrstück (22, 22a, 22b) in seiner ausgefahrenen Position in die Schließrichtung (X) in eine Aufnahmeöffnung (310, 310a, 310b) des zweiten Verschlussteils (3) einsteckbar ist und in der Schließstellung, in der das erste Verschlussteil (2) mit dem zweiten Verschlussteil (3) in Wirkverbindung steht, in die Aufnahmeöffnung (310, 310a, 310b) des zweiten Verschlussteils (3) eingreift.

7. Verschlussvorrichtung nach einem der vorangehenden Ansprüche, **dadurch gekennzeichnet,** dass das Überführen des Sperrstücks (22, 22a, 22b) von der eingefahrenen Position in die ausgefahrene Position durch die magnetischen Mittel (223, 223a, 223b, 331, 331 a, 331 b) beim Ansetzen des ersten Verschlussteils (2) an das zweite Verschlussteil (3) unterstützt wird.

8. Verschlussvorrichtung nach einem der Ansprüche 4 bis 7, **dadurch gekennzeichnet,** dass das Sperrstück (22, 22a, 22b) gegenüber dem Gehäuse (21) des ersten Verschlussteils (2) in die eingefahrene Position vorgespannt ist.

9. Verschlussvorrichtung nach einem der vorangehenden Ansprüche, **dadurch gekennzeichnet,** dass zum Lösen der Verschlussvorrichtung (1) das Federverriegelungselement (34, 34a, 34b) in eine im Wesentlichen quer zur Schließrichtung gerichtete Öffnungsrichtung (Y) relativ zu dem Sperrstück (22, 22a, 22b) verschiebbar oder verdrehbar ist, um das Federverriegelungselement (34, 34a, 34b) und das Sperrstück (22, 22a, 22b) außer Eingriff zu bringen.

10. Verschlussvorrichtung nach Anspruch 9, **dadurch gekennzeichnet,** dass das zweite Verschlussteil (3) ein Verstellelement (33) und ein Gehäuse (31) aufweist, wobei das Verstellelement (33) entlang der Öffnungsrichtung (Y) verschiebbar an dem Gehäuse (31) gelagert ist und das Federverriegelungselement (34a, 34b) trägt.

11. Verschlussvorrichtung nach einem der vorangehenden Ansprüche, **dadurch gekennzeichnet,** dass das Federverriegelungselement (34, 34a, 34b) sich in eine Umfangsrichtung (U) um die Schließrichtung (X) erstreckt und in der Schließstellung das Sperrstück (22, 22a, 22b) in der Umfangsrichtung (U) zumindest abschnittsweise umgreift.

12. Verschlussvorrichtung nach einem der vorangehenden Ansprüche, **dadurch gekennzeichnet,** dass das erste Verschlussteil (2) zwei Sperrstücke (22a, 22b) umfasst, die jeweils verschiebbar an dem Gehäuse (21) angeordnet sind und denen jeweils eine elektrische Spule (4, 4a, 4b) des ersten Verschlussteils (2) zugeordnet ist.

13. Verschlussvorrichtung nach Anspruch 12, **dadurch gekennzeichnet,** dass jedes Sperrstück (22a, 22b) in der Schließstellung in eine Aufnahmeöffnung (310a, 310b) des zweiten Verschlussteils (3) eingreift und im Bereich jeder Aufnahmeöffnung (310a, 310b) eine elektrische Spule (5a, 5b) angeordnet ist.

14. Verschlussvorrichtung nach Anspruch 12 oder 13, **dadurch gekennzeichnet,** dass an zumindest einem der Sperrstücke (22a, 22b) ein magnetischer Anker (6) angeordnet ist.

15. Verschlussvorrichtung nach einem der Ansprüche 12 bis **14, dadurch gekennzeichnet,** dass die induktive Kopplung über die dem einen Sperrstück (22a, 22b) zugeordnete Spule (4a, 4b) zur Übertragung elektrischer Energie und die induktive Kopplung über die dem anderen Sperrstück (22a, 22b) zugeordnete Spule (4a, 4b) zur Datenübertragung ausgelegt ist.

## Claims

1. A closure device, comprising
- a first closure part (2) which includes a locking piece (22, 22a, 22b),
- a second closure part (3) which includes a spring locking element (34, 34a, 34b), and
- magnetic means (223, 223a, 223b, 331, 331a, 331b) which act between the first closure part (2) and the second closure part (2) and effect a force of magnetic attraction between the first closure part (2) and the second closure part (3),
wherein
- for closing the closure device the first closure part (2) can be attached to the second closure part (3) in a closing direction,
- in a closed position the locking piece (22, 22a, 22b) and the spring locking element (34, 34a, 34b) are in engagement with each other, so that the first closure part (2) is unlocked with respect to the second closure part (3) against the closing direction, and
- for releasing the closure device the spring locking element (34, 34a, 34b) and the locking piece (22, 22a, 22b) are shiftable or rotatable relative to each other, in order to bring the spring locking element (34, 34a, 34b) and the locking piece (22, 22a, 22b) out of engagement,
- on each of the first closure part (2) and on the second closure part (3) an electric coil (4, 5) is arranged for electromagnetic coupling in the closed position,
**characterized** in that the spring locking element (34, 34a, 34b) is an at least sectionally resiliently formed spring locking element.

2. The closure device according to claim 1, **characterized** in that in the closed position a first housing portion (215) of the first closure part (2) and a second housing portion (311) of the second closure part (3) extend parallel to each other and rest against each other, wherein in the closed position the coils (4, 5) in particular extend in parallel planes extending transversely to the closing direction (X) at the housing portions (215, 311).

3. The closure device according to claim 1 or 2, **characterized in** that the magnetic means (223, 223a, 223b, 331, 331 a, 331 b) act between the locking piece (22, 22a, 22b) of the first closure part (2) and the second closure part (3) and effect a force of magnetic attraction between the locking piece (22, 22a, 22b) of the first closure part (2) and the second closure part (3).

4. The closure device according to any of the preceding claims, **characterized in** that the locking piece (22, 22a, 22b) is movably arranged on a housing (21) of the first closure part (2) such that in a retracted position it is at least partly enclosed in a receiving chamber (213, 213a, 213b) of the housing (21) and in an extended position protrudes from the housing (21) such that it can be brought in engagement with the spring locking element (34, 34a, 34b), wherein in particular
- a first coil (4, 4a, 4b) is arranged on the locking piece (22, 22a, 22b) and together with the locking piece (22, 22a, 22b) can be transferred into the extended position, or
- a first coil (4, 4a, 4b) is arranged on the housing (21) of the first closure part (2) and the locking piece (22, 22a, 22b) carries a magnetic armature (6) which together with the locking piece (22, 22a, 22b) can be transferred into the extended position.

5. The closure device according to claim 4, **characterized in** that in the retracted position the locking piece (22, 22a, 22b) does not protrude from the housing (21) to the outside.

6. The device according to claim 4 or 5, **characterized in** that in its extended position the locking piece (22, 22a, 22b) can be inserted into a receiving opening (310, 310a, 310b) of the second closure part (3) in the closing direction (X) and in the closed position, in which the first closure part (2) is operatively connected with the second closure part (3), engages into the receiving opening (310, 310a, 310b) of the second closure part (3).

7. The closure device according to any of the preceding claims, **characterized in** that transferring the locking piece (22, 22a, 22b) from the retracted position into the extended position is supported by the magnetic means (223, 223a, 223b, 331, 331 a, 331 b) when the first closure part (2) is attached to the second closure part (3).

8. The closure device according to any of claims 4 to 7, **characterized in** that the locking piece (22, 22a, 22b) is pretensioned into the retracted position with respect to the housing (21) of the first closure part (2).

9. The closure device according to any of the preceding claims, **characterized in** that for releasing the closure device (1) the spring locking element (34, 34a, 34b) is shiftable or rotatable relative to the locking piece (22, 22a, 22b) in an opening direction (Y) directed substantially transversely to the closing direction, in order to bring the spring locking element (34, 34a, 34b) and the locking piece (22, 22a, 22b) out of engagement.

10. The closure device according to claim 9, **characterized in** that the second closure part (3) includes an adjusting element (33) and a housing (31), wherein the adjusting element (33) is shiftably mounted on the housing (31) along the opening direction (Y) and carries the spring locking element (34a, 34b).

11. The closure device according to any of the preceding claims, **characterized in** that the spring locking element (34, 34a, 34b) extends in a circumferential direction (U) around the closing direction (X) and in the closed position at least sectionally encloses the locking piece (22, 22a, 22b) in the circumferential direction (U).

12. The closure device according to any of the preceding claims, **characterized in** that the first closure part (2) comprises two locking pieces (22a, 22b) which each are shiftably arranged on the housing (21) and to each of which an electric coil (4, 4a, 4b) of the first closure part (2) is associated.

13. The closure device according to claim 12, **characterized in** that in the closed position each locking piece (22a, 22b) engages into a receiving opening (310a, 310b) of the second closure part (3) and in the region of each receiving opening (310a, 310b) an electric coil (5a, 5b) is arranged.

14. The closure device according to claim 12 or 13, **characterized** in that on at least one of the locking pieces (22a, 22b) a magnetic armature (6) is arranged.

15. The closure device according to any of claims 12 to 14, **characterized in** that the inductive coupling via the coil (4a, 4b) associated to the one locking piece (22a, 22b) is configured for transmitting electric energy and the inductive coupling via the coil (4a, 4b) associated to the other locking piece (22a, 22b) is configured for data transmission.

## Revendications

1. Dispositif de fermeture avec
- une première partie de fermeture (2) qui présente une pièce de verrouillage (22, 22a, 22b),
- une deuxième partie de fermeture (3) qui présente un élément de verrouillage à ressort (34, 34a, 34b) et
- des moyens magnétiques (223, 223a, 223b, 331, 331a, 331b) qui agissent entre la première partie de fermeture (2) et la deuxième partie de fermeture (3) et produisent une force d'attraction magnétique entre la première partie de fermeture (2) et la deuxième partie de fermeture (3),
dans lequel
- pour la fermeture du dispositif de fermeture, la première partie de fermeture (2) peut être placée dans une direction de fermeture contre la deuxième partie de fermeture (3),
- dans une position de fermeture, la pièce de verrouillage (22, 22a, 22b) et l'élément de verrouillage à ressort (34, 34a, 34b) sont en engagement l'un avec l'autre de sorte que la première partie de fermeture (2) est verrouillée par rapport à la deuxième partie de fermeture (3) dans la direction opposée à la direction de fermeture et
- pour la libération du dispositif de fermeture, l'élément de verrouillage à ressort (34, 34a, 34b) et la pièce de verrouillage (22, 22a, 22b) sont mobiles en translation ou en rotation l'un par rapport à l'autre afin de désengager l'élément de verrouillage à ressort (34, 34a, 34b) et la pièce de verrouillage (22, 22a, 22b),
une bobine électrique (4, 5) étant agencée sur chacune de la première partie de fermeture (2) et de la deuxième partie de fermeture (3) pour le couplage électromagnétique dans la position de fermeture, **caractérisé en ce que** l'élément de verrouillage à ressort (34, 34a, 34b) est un élément de verrouillage à ressort réalisé au moins par portion avec une élasticité du type à ressort.

2. Dispositif de fermeture selon la revendication 1, **caractérisé en ce que** dans la position de fermeture, une première portion de boîtier (215) de la première partie de fermeture (2) et une deuxième portion de boîtier (311) de la deuxième partie de fermeture (3) s'étendent parallèlement l'une à l'autre et reposent l'une contre l'autre, les bobines (4, 5) s'étendant dans la position de fermeture en particulier dans des plans parallèles s'étendant transversalement à la direction de fermeture (X) sur les portions de boîtier (215, 311).

3. Dispositif de fermeture selon la revendication 1 ou 2, **caractérisé en ce que** les moyens magnétiques (223, 223a, 223b, 331, 331a, 331b) agissent entre la pièce de verrouillage (22, 22a, 22b) de la première partie de fermeture (2) et la deuxième partie de fermeture (3) et produisent une force d'attraction magnétique entre la pièce de verrouillage (22, 22a, 22b) de la première partie de fermeture (2) et la deuxième partie de fermeture (3).

4. Dispositif de fermeture selon l'une quelconque des revendications précédentes, **caractérisé en ce que** la pièce de verrouillage (22, 22a, 22b) est agencée de manière mobile sur un boîtier (21) de la première partie de fermeture (2) de telle manière qu'elle soit enchâssée dans une position rentrée au moins en partie dans une chambre de réception (213, 213a, 213b) du boîtier (21) et fait saillie du boîtier (21) dans une position sortie de telle manière qu'elle puisse être amenée en engagement avec l'élément de verrouillage à ressort (34, 34a, 34b), dans lequel en particulier
- une première bobine (4, 4a, 4b) est agencée sur la pièce de verrouillage (22, 22a, 22b) et peut être déplacée conjointement avec la pièce de verrouillage (22, 22a, 22b) dans la position sortie ou
- une première bobine (4, 4a, 4b) est agencée sur le boîtier (21) de la première partie de fermeture (2) et la pièce de verrouillage (22, 22a, 22b) porte un induit magnétique (6) qui peut être déplacé conjointement avec la pièce de verrouillage (22, 22a, 22b) dans la position sortie.

5. Dispositif de fermeture selon la revendication 4, **caractérisé en ce que** la pièce de verrouillage (22, 22a, 22b) ne fait pas saillie vers l'extérieur du boîtier (21) dans la position rentrée.

6. Dispositif selon la revendication 4 ou 5, **caractérisé en ce que** la pièce de verrouillage (22, 22a, 22b) dans sa position sortie peut être enfichée dans la direction de fermeture (X) dans une ouverture de réception (310, 310a, 310b) de la deuxième partie de fermeture (3) et s'engage dans la position de fermeture, dans laquelle la première partie de fermeture (2) est en liaison active avec la deuxième partie de fermeture (3), dans l'ouverture de réception (310, 310a, 310b) de la deuxième partie de fermeture (3).

7. Dispositif de fermeture selon l'une quelconque des revendications précédentes, **caractérisé en ce que** le déplacement de la pièce de verrouillage (22, 22a, 22b) de la position rentrée à la position sortie est assisté par les moyens magnétiques (223, 223a, 223b, 331, 331a, 331b) lors du placement de la première partie de fermeture (2) contre la deuxième partie de fermeture (3).

8. Dispositif de fermeture selon l'une quelconque des revendications 4 à 7, **caractérisé en ce que** la pièce de verrouillage (22, 22a, 22b) est précontrainte par rapport au boîtier (21) de la première partie de fermeture (2) dans la position rentrée.

9. Dispositif de fermeture selon l'une quelconque des revendications précédentes, **caractérisé en ce que** pour la libération du dispositif de fermeture (1), l'élément de verrouillage à ressort (34, 34a, 34b) est mobile en translation ou en rotation dans une direction d'ouverture (Y) dirigée sensiblement transversalement à la direction de fermeture par rapport à la pièce de verrouillage (22, 22a, 22b) afin de désengager l'élément de verrouillage à ressort (34, 34a, 34b) et la pièce de verrouillage (22, 22a, 22b).

10. Dispositif de fermeture selon la revendication 9, **caractérisé en ce que** la deuxième partie de fermeture (3) présente un élément de réglage (33) et un boîtier (31), l'élément de réglage (33) étant reçu de manière mobile le long de la direction d'ouverture (Y) sur le boîtier (31) et portant l'élément de verrouillage à ressort (34a, 34b).

11. Dispositif de fermeture selon l'une quelconque des revendications précédentes, **caractérisé en ce que** l'élément de verrouillage à ressort (34, 34a, 34b) s'étend dans une direction périphérique (U) autour de la direction de fermeture (X) et, dans la position de fermeture, entoure au moins par portion la pièce de verrouillage (22, 22a, 22b) dans la direction périphérique (U).

12. Dispositif de fermeture selon l'une quelconque des revendications précédentes, **caractérisé en ce que** la première partie de fermeture (2) présente deux pièces de verrouillage (22a, 22b) qui sont agencées respectivement de manière mobile sur le boîtier (21) et auxquelles est associée respectivement une bobine électrique (4, 4a, 4b) de la première partie de fermeture (2).

13. Dispositif de fermeture selon la revendication 12, **caractérisé en ce que** chaque pièce de verrouillage (22a, 22b) s'engage dans la position de fermeture dans une ouverture de réception (310a, 310b) de la deuxième partie de fermeture (3) et une bobine électrique (5a, 5b) est agencée dans la zone de chaque ouverture de réception (310a, 310b).

14. Dispositif de fermeture selon la revendication 12 ou 13, **caractérisé en ce qu'**un induit magnétique (6) est agencé sur au moins l'une des pièces de verrouillage (22a, 22b).

15. Dispositif de fermeture selon l'une quelconque des revendications 12 à 14, **caractérisé en ce que** le couplage inductif par la bobine (4a, 4b) associée à l'une des pièces de verrouillage (22a, 22b) est conçu pour la transmission d'énergie électrique et le couplage inductif par la bobine (4a, 4b) associée à l'autre pièce de verrouillage (22a, 22b) est conçu pour la transmission de données.
